# FASCICULE DE BREVET EUROPEEN

(11) **EP 4 239 209 B1**
(45) Date de publication et mention de la délivrance du brevet: **15.10.2025**
(21) Numéro de dépôt: 23156383.4
(22) Date de dépôt: 13.02.2023
(51) Int. Cl.: F16D 13/70, F16D 25/0638, F16D 25/10

(54) **MODULE D'EMBRAYAGE ET PROCÉDÉ DE FERMETURE D'UN TEL MODULE D'EMBRAYAGE**
KUPPLUNGSMODUL UND VERFAHREN ZUM SCHLIESSEN EINES SOLCHEN KUPPLUNGSMODULS
CLUTCH MODULE AND METHOD FOR CLOSING SUCH A CLUTCH MODULE

(30) Priorité: 01.03.2022 FR 2201795
(43) Date de publication de la demande: 06.09.2023
(73) Titulaire: VALEO EMBRAYAGES, 80009 Amiens (FR)
(72) Inventeur: BRAILLY, Julien, 95892 Cergy Pontoise (FR); DELVILLE, Christopher, 95892 Cergy Pontoise (FR)
(74) Mandataire: Valeo Powertrain Systems

(56) Documents cités:
- EP-A1- 3 061 984
- EP-A1- 3 366 941
- DE-A1- 102015 203 711
- DE-A1- 102015 204 822

## Description

L'invention concerne un module d'embrayage notamment de type triple embrayage, pour une transmission d'un engin de mobilité, notamment de type hybride pour laquelle une machine électrique tournante est disposée en parallèle ou coaxiale à l'axe principal de la transmission de couple, ainsi qu'un procédé de fermeture d'un tel module d'embrayage assurant sa fermeture.

Un triple embrayage comporte un embrayage de coupure et un double embrayage humide constitué d'un premier et un deuxième embrayage multidisques, aptes à coupler ou découpler sélectivement des moyens d'entrée de couple avec des premier et second arbres de sortie de couple. Les documents DE 10 2015 203711 A1, EP3 366 941 A1 et EP 3 061 984 A1 montrent des exemples d'embrayages multidisques.

Chaque embrayage multidisque comporte des portes-disques d'entrée et de sortie de couple liés à des flasques ou à des disques de friction de l'embrayage respectif, ainsi qu'un moyeu connecté respectivement à l'arbre d'entrée de couple ou à l'un des arbres de sortie de couple. Ces pièces, tournantes ou fixes, du module d'embrayage sont maintenues radialement et axialement en réalisant un jeu maitrisé, grâce à la disposition de cales et de roulements pilote à ces endroits.

Pour réaliser un triple d'embrayage, l'empilage axial de ces pièces doit être compact et la fermeture s'achève par l'adjonction d'un couvercle de fermeture qui, une fois monté sur des roulements pilote, est ensuite soudé par une soudure à un porte-disques d'embrayage de coupure. Cette liaison soudée de type laser par exemple, permet à la fois de limiter toute perturbation de la liaison pignon couronne du moteur électrique et de limiter le défaut de coaxialité des deux roulements pilotes.

Mais cette liaison soudée présente des inconvénients, y compris des problèmes de tenue en bout à bout des pièces. La section radiale en extrémité du porte-disques soudé, depuis laquelle est réalisée la soudure, doit être de faible dimension, sans coulure. Complexe et couteuse à réaliser, la soudure exige de faibles défauts géométriques des pièces et l'emploi d'outils auxiliaire rectifiant le montage.

Dans les développements actuels d'hybridation (« hybridisation » en anglais) des véhicules, aucun démontage ni récupération de pièces n'est possible après cette soudure, sans venir endommager les pièces soudées. Impossible aussi d'intervenir ni de remplacer des pièces à l'intérieur du module, en cas de non-conformité et d'usure, pour une seconde vie du produit.

L'invention a pour but d'apporter une solution simple, efficace et économique à ce problème. On cherche à réaliser une nouvelle fermeture du module d'embrayage, et en particulier un nouvel assemblage du couvercle de fermeture sur l'embrayage de coupure, qui concile les exigences de fermeture et d'ouverture, de tenue mécanique, sans toutefois le dégrader une fois assemblé.

Dans ce but, l'invention propose selon la revendication 1, un module d'embrayage pour un engin de mobilité, d'axe X de rotation, comprenant au moins :
- au moins un embrayage d'entrée de type multidisque, comprenant: un porte-disques d'entrée de couple fixé solidairement à un élément d'entrée de couple, et un porte-disques de sortie de couple, lesdits portes-disques d'entrée et de sortie comprenant chacun une cannelure adaptée à supporter en partie un groupe de disques de l'embrayage d'entrée, et
- un couvercle de fermeture du module d'embrayage, disposé d'un côté de l'élément d'entrée, qui est lié solidairement au moins radialement au porte-disques d'entrée ou de sortie par une liaison emmanchée, ladite liaison emmanchée étant maintenue fixe par un anneau d'arrêt axial qui est inséré dans une gorge réalisée dans ledit porte-disque emmanché d'entrée ou de sortie. Le couvercle de fermeture est monté en pré-charge axiale dans le porte-disque emmanché d'entrée ou de sortie, la pré-charge axiale étant réalisée par déformation axiale du couvercle de fermeture, en particulier qui est déformé par rapport à un élément de calage du fond du couvercle de fermeture.

On entend par « côté de l'élément d'entrée » que le couvercle de fermeture est disposé adjacent de l'élément d'entrée, d'une manière rapprochée par rapport à l'élément d'entrée. Le couvercle de fermeture peut être disposé axialement en regard de l'élément d'entrée ;
Ainsi, on simplifie la fermeture du module d'embrayage, avec un montage et un démontable possible du couvercle de fermeture. Toute pièce peut être remplacée ou réutilisée, avant et après l'opération de fermeture, sans détérioration, via les liaisons emmanchée et clipsée du couvercle de fermeture.

La liaison emmanchée (press-fit en anglais) du couvercle de fermeture est réalisé sans jeu radial. L'emmanchement en force seul peut autoriser des degrés de liberté. La liaison clipsée ensuité réalisée en partie par l'anneau d'arrêt axial (clip en anglais) limite axialement la liaison emmanchée. L'ensemble des liaisons emmanchée et clipsée limite le jeu autant radialement qu'axialement.

Avec les liaisons emmanchée et clipsée, le couvercle de fermeture est monté avec un porte-disques de l'embrayage, d'une manière satisfaisante ; puisque, à l'inverse desdits portes-disques d'entrée et de sortie, le couvercle de fermeture est exempté de transmission de couple. Ainsi un jeu fonctionnel relativement faible (notamment circonférentielle) peut y résulter au montage et en fonctionnement, néanmoins sans incidence sur la transmission du couple. On peut envisager divers exemples de formes emmanchées, avantageusement réalisées et localisées (i.e. zones de serrages)

Ce module d'embrayage peut présenter l'une ou l'autre des caractéristiques décrites ci-dessous, combinées entre elles ou prises indépendamment les unes des autres :
- Le couvercle de fermeture peut être emmanché sur une extrémité libre du porte-disques d'entrée ou de sortie. Cette extrémité libre est discontinue et réalisée par découpes de l'extrémité de la cannelure du porte-disques emmanché (d'entrée ou de sortie). Cette extrémité libre est issue du prolongement de la cannelure du porte-disques emmanché (d'entrée ou de sortie) ;
- Le couvercle de fermeture peut comprendre un bandeau externe ménagé pour retenir le porte-disque emmanché (d'entrée ou de sortie), le bandeau externe étant notamment suffisamment épais pour maintenir en radial la cannelure du porte-disques, par exemple supérieure à l'épaisseur dudit porte-disque emmanché d'entrée ou de sortie ; On empêche toute déformation excessive de la cannelure du porte-disques. L'épaisseur du bandeau externe est supérieure à 1,5 fois l'épaisseur dudit porte-disque emmanché d'entrée ou de sortie, notamment compris entre 2 et 3 fois l'épaisseur dudit porte-disque emmanché d'entrée ou de sortie ;

Selon l'invention, le couvercle de fermeture est monté en pré-charge axiale dans le porte-disque emmanché (d'entrée ou de sortie). La pré-charge axiale est réalisée au moins en partie au niveau de la liaison emmanchée. Ceci compense les efforts axiaux liés aux passages de couple de la liaison pignon couronne du moteur électrique et elle limite les risques de bruvance.

La pré-charge axiale est réalisée par déformation axiale dudit couvercle de fermeture, en particulier par déformation par rapport à un élément de calage du fond du couvercle de fermeture.

Par exemple, l'élément de calage peut être intercalé axialement entre le couvercle de fermeture et le porte-disques d'entée de couple ;

Par exemple, le couvercle de fermeture peut comprendre un moyen de réaction agencé pour venir en appui selon la direction axiale sur le groupe de disques de l'embrayage d'entrée ;

En outre le moyen de réaction du couvercle, proche de la liaison emmanchée, peut être monté en pré-charge axiale dans le porte-disque emmanché. Ainsi rapproché, le moyen de réaction définit un jeu optimal entre les disques de l'ensemble multidisques et l'actionnement de l'embrayage d'entrée en phase de débrayage.

De manière détaillée, la précontrainte axiale du couvercle résulte d'une mise sous presse, notamment d'une force axiale non nulle, par exemple supérieure ou égale à 100 Newton. Cette mise sous presse vient déformer (par enfoncements) davantage la zone emmanchée du couvercle que le fond du couvercle calé par un élément de calage. Ainsi le couvercle de fermeture est monté déformé par rapport à un élément de calage du fond du couvercle de fermeture :
- Selon un mode de réalisation particulier, le couvercle de fermeture peut être reçu au travers d'échancrures qui sont ménagées sur le porte-disque emmanché d'entrée ou de sortie ;
- **Le couvercle** de fermeture peut présenter un fond délimité par une portion de cylindre interne, recevant notamment un élément de calage et un organe de roulement, en particulier sur laquelle est centré un élément de calage ou un organe de roulement ;
- La position axiale du couvercle de fermeture peut être modulable en fonction : de l'épaisseur de l'anneau d'arrêt axial, de l'épaisseur de l'élément de calage et de la profondeur usinée des échancrures du porte-disque d'entrée, pour la fermeture du module d'embrayage renfermant de telles pièces. Ces paramètres ajustent au mieux la position axiale du couvercle de fermeture;
- La position axiale du couvercle de fermeture peut être modulable en fonction d'une force de précharge exercée sur le couvercle de fermeture, de préférence sous presse, qui est par exemple supérieure ou égale à 100 Newton. On réalise un pré-charge du couvercle de fermeture au niveau du porte-disques emmanché ;
- Par exemple, le couvercle de fermeture n'est pas dans le chemin de transmission du couple ;

- Le couvercle de fermeture et le porte-disque emmanché (d'entrée ou de sortie) peuvent être réalisés dans des matériaux différents de telle manière à réaliser la liaison emmanchée.
- Le porte-disque emmanché peut être flexible, c'est-à-dire non élastiquement déformable ;
- Le couvercle de fermeture et le porte-disque emmanché (d'entrée ou de sortie) peuvent être réalisés dans des duretés différentes, de préférence de duretés élevées, de telle manière à réaliser la liaison emmanchée. Le ratio de la dureté du porte-disque emmanché (d'entrée ou de sortie) sur la dureté du couvercle de fermeture peut être supérieur ou égal à 1, en particulier le ratio est compris entre 1,1 et 3, le porte-disques n'étant alors ni déformable ni élastique mais au contraire très rigide ;

- La liaison emmanchée peut être en partie par le porte-disques de sortie de couple de l'embrayage d'entrée. La gorge de l'anneau d'arrêt axial est réalisée dans ce porte-disque de sortie ;
- Le porte-disques de sortie de couple peut être apte à être supporté par un moyeu principal ;
- Le porte-disques de sortie de couple peut être un porte-disques externe. Sa cannelure est interne. La portion fonctionnelle de la cannelure est ainsi la portion radialement interne dit proximale ;
- Le porte-disques emmanché peut comprendre une série de pattes cannelées qui sont formées dans le prolongement de la cannelure et logées au travers de fenêtres du couvercle de fermeture ;
- La série de pattes cannelées peut être découpée depuis l'extrémité libre du porte-disques emmanché, en particulier des découpes sous formes d'échancrures.
- Les échancrures délimitent entre elles des pattes cannelées du porte-disques emmanché ;
- Au moins certaines des pattes cannelées et/ou échancrures peuvent être de formes identiques. De préférence, l'ensemble des pattes cannelées et/ou échancrures présente une forme identique.
- Au moins certaines des pattes cannelées peuvent être emmanchées en force au travers de fenêtres. L'ensemble des pattes cannelées emmanchées et des fenêtres peuvent former la liaison emmanchée. Ainsi les pattes cannelées peuvent être emmanchées en force au travers des fenêtres ;
- La gorge de l'anneau d'arrêt axial peut être réalisée dans au moins certaines des pattes cannelées, de préférence dans au moins 1/3 de l'ensemble desdites pattes cannelées. En particulier dans l'ensemble de pattes cannelées. La gorge de l'anneau d'arrêt axial peut être ainsi discontinue ;
- Chaque patte cannelée peut comprendre au moins une portion proximale, délimitant une dent interne, et au moins deux portions distales délimitant chacune une gorge.
- La gorge peut être réalisée dans les dents desdites pattes cannelées ;
- Au moins certaines pattes cannelées peuvent comprendre chacune deux portions proximales (délimitant chacune une dent interne) et trois portions distales ;
- La liaison emmanchée d'une patte cannelée est réalisée en deux zones de serrage qui sont espacées et disposées de part et d'autre d'un plan de symétrie d'une patte cannelée ;
- Une patte cannelée peut de forme symétrique, comprenant de préférence en section, en particulier en son centre, un plan de symétrie passant par l'axe X,
- Une patte cannelée peut comprendre en section un plan de symétrie contenant l'axe X, la liaison emmanchée d'une patte cannelée étant réalisée en deux zones de serrage qui sont espacées et disposées de part et d'autre dudit plan de symétrie ;
- Les zones de serrage peuvent être disposées de manière symétrique ou asymétrique par rapport au plan de symétrie. Les deux zones de serrage peuvent être de préférence angulairement opposées.
- Les zones de serrage peuvent être diamétralement opposées ;
- Une patte cannelée peut être emmanchée de manière décentrée à l'intérieur d'une fenêtre, c'est-à-dire décalée angulairement par rapport au centre d'une fenêtre et rapprochée d'au moins un bord de la fenêtre. En raison d'un tel décalage ou désalignement de la liaison emmanchée, on concentre la déformation plus d'un côté que de l'autre ;
- Dans cette situation, les pattes cannelées peuvent être emmanchées dans un sens de rotation de l'axe X dit sens horaire, ce qui augmente le couple de rotation, ou dans un sens anti-horaire, ce qui créer un couple de rotation opposée (mais plus faible) au couple de rotation existant ;
- Alternativement, une patte cannelée peut être emmanchée de manière centrée à l'intérieur d'une fenêtre, c'est-à-dire au centre ou milieu d'une fenêtre du couvercle de fermeture, en particulier à équidistance des bords latéraux d'une fenêtre. Une patte cannelée peut être centrée angulairement au milieu d'une fenêtre du couvercle ;
- La liaison emmanchée d'une patte cannelée peut être réalisée par un seul ou deux des bords d'une fenêtre choisi(s) parmi le bord intérieur, le bord extérieur et les bords latéraux délimitant la fenêtre. Un seul bord ou deux bords d'une fenêtre peuvent emmanchés en partie une patte cannelée, par exemple une dent ou une gorge de ladite patte cannelée ;
- A titre d'exemple, la liaison emmanchée d'une patte cannelée peut être réalisée au moins en partie par une des deux tranches délimitant ladite patte cannelée. On entend par tranche la largeur de découpe d'une patte cannelée. Deux tranches délimitent angulairement une patte cannelée ;
- A titre d'exemple, la liaison emmanchée d'une patte cannelée est réalisée par deux tranches de ladite patte cannelée. L'avantage est de réaliser la liaison emmanchée par compression de la patte cannelée. Dès lors, la liaison emmanchée d'une telle patte cannelée est réalisée sur les deux bords latéraux d'une fenêtre du couvercle de fermeture ;
- A titre d'exemple, la liaison emmanchée d'une patte cannelée peut être réalisée au moins en partie en appui depuis un flanc intérieur délimitant ladite patte cannelé.

On entend par flanc intérieur une portion proximale de la patte cannelée, rapproché de l'axe X, qui peut délimiter au moins en partie une dent de la patte cannelée ;
- A titre d'exemple, la liaison emmanchée d'une patte cannelée peut être réalisée en appui depuis deux flancs intérieurs d'une patte cannelée, en particulier espacés l'un de l'autre.

L'avantage est de réaliser la liaison emmanchée sur la portion fonctionnelle de la cannelure du porte-disques emmanché dédiée à recevoir et engrener en rotation une partie des disques de l'embrayage d'entrée. Dès lors, la liaison emmanchée d'une telle patte cannelée est réalisée uniquement en appui sur le bord intérieur d'une fenêtre du couvercle de fermeture ;
- A titre d'exemple, la liaison emmanchée d'une patte cannelée peut être réalisée en appui depuis un flanc intérieur de la patte cannelée d'une part, et depuis un flanc extérieur ou une tranche de la patte cannelée d'autre part, en particulier espacés l'un de l'autre.

L'avantage est de réaliser la liaison emmanchée par deux forces agissant en directions opposées, en direction du centre de la fenêtre ou d'un plan P passant par le centre de la fenêtre, ou encore le long d'un même plan P passant par le centre de la fenêtre, par exemple par cisaillement ;
- A titre d'exemple, la liaison emmanchée d'une patte cannelée peut être réalisée en appui depuis un flanc intérieur et une tranche de ladite patte cannelée, en particulier espacés l'un de l'autre.

L'avantage est de réaliser la liaison emmanchée par deux forces agissant en directions opposées vers le centre de la fenêtre, en particulier en étant sécantes en un point d'un plan P passant par le centre de la fenêtre. Dès lors, la liaison emmanchée d'une telle patte cannelée est réalisée en appui sur le bord intérieur et par un des bords latéraux d'une fenêtre. Ces bords d'appui d'une fenêtre sont de préférence asymétriques et diamétralement opposés ;

Alternativement, la liaison emmanchée d'une patte cannelée peut être réalisée depuis un flanc intérieur de la patte cannelée et par un flanc extérieur de ladite patte cannelée, en particulier espacés l'un de l'autre. Dès lors, la liaison emmanchée d'une telle patte cannelée est réalisée en appui depuis le bord intérieur et par le bord extérieur. Ces bords d'appui d'une fenêtre sont de préférence asymétriques et diamétralement opposés ;
- La liaison emmanchée d'une patte cannelée peut être réalisée au moins en partie depuis au moins un flanc extérieur délimitant ladite patte cannelé, en particulier espacés l'un de l'autre.

On entend par flanc extérieur une portion distale de la patte cannelée, éloignée de l'axe X, qui peut délimiter au moins en partie une dent de ladite patte cannelée ;
- A titre d'exemple, la liaison emmanchée d'une patte cannelée peut être réalisée depuis deux flancs extérieurs d'une patte cannelée, en particulier espacés l'un de l'autre.

L'avantage est de réaliser la liaison emmanchée sur la portion non-fonctionnelle de la cannelure du porte-disques emmanché exemptée à recevoir des disques. De sorte à préserver la fonction de coupler en rotation par engrènement une partie des disques de l'embrayage d'entrée.

Dès lors, la liaison emmanchée d'une telle patte cannelée est réalisée uniquement en appui sur le bord extérieur d'une fenêtre du couvercle de fermeture ;
- Une fenêtre peut comprend au moins une crête, depuis laquelle (ou lesquelles) est emmanchée en partie une patte cannelée, par exemple une dent. L'avantage d'une crête (forme dentée) est de lier solidairement en rotation par engrènement la patte cannelée avec la fenêtre. Ceci assure une liaison en rotation avec le couvercle de fermeture.
- Une crête est d'extension radiale ou tangentielle, s'étend radialement vers l'intérieur ou l'extérieur, c'est-à-dire en direction du centre de la fenêtre ou direction opposée au centre de la fenêtre ;
- Une crête peut s'étendre radialement vers l'extérieur. La liaison emmanchée assure d'engrener la fenêtre depuis l'intérieur de la cannelure, dans l'espace délimité entre les dents (i.e. gorges). Ainsi la crête coopère avec une gorge de la cannelure. De ce fait, le plan de symétrie d'une patte cannelée passe par une gorge définissant le milieu ou centre (de gravité, de symétrie) de ladite patte cannelée ;
- Une crête peut s'étendre radialement vers l'intérieur. La liaison emmanchée assure d'engrener la fenêtre depuis l'extérieur de la cannelure, dans l'enfoncement des dents. Ainsi la crête coopère avec une dent de la cannelure. De ce fait, le plan de symétrie d'une patte cannelée passe par une dent définissant le milieu ou centre (de gravité, de symétrie) de ladite patte cannelée ;
- Une crête peut être de forme complémentaire à celle d'une dent ou d'une gorge de la cannelure du porte-disques emmanché ;
- Alternativement ou en complément, une fenêtre peut comprendre au moins une portion renflée, depuis laquelle (ou lesquelles) est emmanchée en partie une patte cannelée, par exemple une dent.
- Une portion renflée peut être d'extension radiale ou tangentielle, s'étendant radialement ou tangentiellement vers l'intérieur. L'avantage est d'exercer une force centripète sur l'extérieur de la patte cannelée. Cette liaison emmanchée vient centrer la cannelure depuis l'extérieur, ce qui tend à rapprocher les dents (i.e. portion fonctionnelle) ;
- Une portion renflée est réalisée par déformation mécanique d'un bord du couvercle. L'avantage est de centrer la patte cannelée au travers de la fenêtre, par exemple de sorte que le plan de symétrie de la patte soit confondu avec le plan central de la fenêtre.
- Une portion renflée est aussi adaptée à l'usure (butée prédéfinie déformable) notamment pour absorber les variations de la liaison emmanchée. D'où un assemblage simplifié et une géométrie préservée de la fenêtre du couvercle de fermeture ;
- La (les) crête(s) et/ou la (les) portion(s) renflée(s) peu(ven)t être formée(s) depuis au moins un des bords de la fenêtre. Les crêtes et/ou les portions renflées sont limitées au nombre de deux ;
- La liaison emmanchée d'une patte cannelée, et notamment la (les) crête(s) et/ou la (les) portion(s) renflée(s) d'une fenêtre, peu(ven)t être réalisée(s) par un seul et même bord de la fenêtre, de préférence réalisée uniquement à partir du bord intérieur de ladite fenêtre ;
- A titre d'exemple, une fenêtre peut comprend au moins une crête et une portion renflée, chacune d'extension radiale ou tangentielle, depuis lesquelles est emmanchée en partie une patte cannelée, par exemple une dent. En variante la partie de la patte cannelée emmanchée peut être une gorge ;
- A titre d'exemple, une fenêtre peut comprendre :
   - deux portions renflées au moins angulairement opposées, ou
   - une crête et une portion renflée au moins angulairement opposées, ou
   - une crête par exemple pourvue de deux portions renflées de part et d'autre de la crête.
- Selon un mode de réalisation particulier, le module d'embrayage peut être un module triple embrayage. Dès lors le module d'embrayage peut comprendre en outre : un premier et un deuxième embrayages de sortie de type multidisque, supportés par un moyeu principal et coopérant en partie avec un premier et un deuxième éléments de sortie de couple, aptes à être couplés respectivement en rotation à un premier et un deuxième arbres menés. L'embrayage d'entrée peut être disposé, notamment radialement, au-delà des premier et deuxième embrayages de sortie.

En variante, le module d'embrayage peut être un simple embrayage ou un double embrayage ;
L'invention a pour objet, selon un autre aspect, un procédé pour assembler et fermer un module d'embrayage, notamment d'un triple embrayage, comprenant au moins les étapes suivantes :
a) Fournir un sous-ensemble d'au moins un embrayage, comportant en outre
   - un porte-disques d'entrée de couple, un élément d'entrée de couple,
   - un moyeu cylindrique et un porte-disques de sortie de couple comprenant une cannelure ;
b) Fixer ensemble le porte-disques d'entrée et l'élément d'entrée de couple, par soudure ;
c) Fixer ensemble le moyeu cylindrique et le porte-disques de sortie de couple, par soudure ;
d) Fournir un couvercle de fermeture et un anneau d'arrêt axial ;
e) Emmancher le couvercle de fermeture sur la cannelure du porte-disques de sortie, avant de le
retenir par l'anneau d'arrêt axial inséré en partie dans une gorge formée dans le porte-disques de sortie.

Ce procédé de fermeture du module d'embrayage est simplifié, avec un montage et un démontable possible du couvercle de fermeture. Toute pièce peut être remplacée ou réutilisée, avant et après l'opération de fermeture, sans détérioration, via les liaisons emmanchée et clipsée du couvercle de fermeture.

La liaison emmanchée (press-fit en anglais) du couvercle de fermeture est réalisé sans jeu radial. L'emmanchement en force seul peut autoriser des degrés de liberté. La liaison clipsée ensuité réalisée en partie par l'anneau d'arrêt axial (clip en anglais) limite axialement la liaison emmanchée. L'ensemble des liaisons emmanchée et clipsée limite le jeu autant radialement qu'axialement.

Avec les liaisons emmanchée et clipsée, le couvercle de fermeture est monté avec un porte-disques de l'embrayage, d'une manière satisfaisante ; puisque, à l'inverse desdits portes-disques d'entrée et de sortie, le couvercle de fermeture est exempté de transmission de couple. Ainsi un jeu fonctionnel relativement faible (notamment circonférentielle) peut y résulter au montage et en fonctionnement, néanmoins sans incidence sur la transmission du couple. On peut envisager divers exemples de formes emmanchées, avantageusement réalisées et localisées (i.e. zones de serrages) Ce procédé de fermeture reprend tout ou partie des caractéristiques mentionnées précédemment.

Un tel procédé peut présenter l'une ou l'autre des caractéristiques décrites précédemment, ainsi que l'une ou l'autre des caractéristiques décrites ci-dessous, combinées entre elles ou prises indépendamment les unes des autres :
- Selon un mode de réalisation, le sous-ensemble d'au moins un embrayage peut comprendre en outre un organe de roulement destiné à venir en appui contre l'élément d'entrée de couple ;
- Selon l'étape e), l'emmanchement peut être réalisé en force ;
- On peut enfiler le couvercle de fermeture sur l'élément d'entrée de couple avant d'être ensuite emmanchée sur la cannelure du porte-disques d'entrée ;
- On peut découper, en extrémité libre la cannelure du porte-disques de sortie, des échancrures à l'intérieur desquelles le couvercle de fermeture est ensuite emmanché selon l'étape e);
- On peut découper, au sein du couvercle de fermeture, notamment depuis l'extrémité externe du couvercle de fermeture, des fenêtres au travers desquelles la cannelure du porte-disques de sortie est ensuite emmanchée en force ;
- Selon un mode de réalisation, la position axiale du couvercle de fermeture est modulable. Après empilage des pièces du sous-ensemble d'embrayage, les cotes restantes à mesurer sont limités à celles du couvercle de fermeture, qui est dernier élément à être positionné et fixé solidairement. Dès lors, la chaine de cotes et la quantité de pièces à mesurer sont considérablement réduits ;
- On peut ajuster la position axiale du couvercle de fermeture en rectifiant au moins en partie la profondeur des échancrures découpées, c'est-à-dire en usinant les échancrures préalablement découpées, ceci afin de les agrandir (pour y ajuster ensuite le couvercle) ;
- On peut ajuster la position axiale du couvercle de fermeture en ajoutant un anneau d'arrêt axial, de préférence d'épaisseur variable, c'est-à-dire en sélectionnant un anneau d'arrêt axial parmi différentes épaisseur d'une même gamme. On peut ré-usiner la gorge logeant un tel anneau d'arrêt ;
- On peut ajuster la position axiale du couvercle de fermeture en ajoutant un élément de calage. L'élément de calage est sélectionné parmi différentes épaisseur d'une même gamme, avant d'être positionné dans le sous-ensemble d'au moins un embrayage, de préférence :
   - soit dans le fond du couvercle de fermeture,
   - soit sur un organe de roulement en appui contre l'élément d'entrée de couple,
   - soit entre un organe de roulement et l'élément d'entrée de couple.

L'avantage est de sélectionner un élément de calage en fonction des chaines de cotes du sous-ensemble d'embrayage et du couvercle de fermeture. L'élément de calage est alors configuré pour respecter les tolérances de fabrication du sous-ensemble d'embrayage et du couvercle, et il est positionné avant le couvercle de fermeture ;
- Selon un mode de réalisation, l'on sélectionne un élément de calage selon les étapes suivantes :
   a') Mesurer une première cote C1 représentative d'une distance axiale entre une face frontale avant de l'organe de roulement et le fond d'une échancrure du porte-disques de sortie de couple ;
   b') Mesurer une deuxième cote C2 représentative d'une distance axiale entre le fond du couvercle et l'extrémité externe du couvercle de fermeture, notamment l'extrémité du bandeau ;
- L'élément de calage, et notamment sa troisième côte C3, est sélectionné en fonction des première et deuxième cotes C1, C2, et notamment de l'épaisseur de l'anneau d'arrêt axial ;
- L'élément de calage, et notamment sa troisième côte C3, est sélectionné par résultat de soustraction de la deuxième cote à la première cote, et notamment de l'addition de l'épaisseur de l'anneau d'arrêt axial. L'avantage est ajuster la position axiale du couvercle de fermeture, en fonction de leurs tolérances de fabrication du sous-ensemble d'embrayage, l'un par rapport à l'autre ;
- Dans un cas particulier, l'on peut sélectionner l'élément de calage qui présente la troisième cote la plus proche du résultat de la soustraction de la deuxième cote à la première cote. Dans un autre cas, l'on peut sélectionner l'élément de calage qui présente la troisième cote la plus proche du résultat de la soustraction de la deuxième cote et de l'épaisseur de l'anneau d'arrêt axial à la première cote ;
- La gamme des éléments de calage peut présenter entre deux et vingt calibres différents, et avantageusement entre trois et dix calibres différents. Un large choix de sélection est possible, un tel nombre de calibres d'éléments de calage assure une compensation précise et suffisante des tolérances de fabrication. Les éléments de calage ayant chacune épaisseur prédéfinie différente les unes des autres, dit troisièmes cote, ici compris entre trois et dix d'éléments de calage ;
- Selon un mode de réalisation, les épaisseurs ou troisièmes cotes des éléments de calage des différents calibres s'étendent sur une plage telle que la différence entre la valeur maximale de la troisième cote et la valeur minimale de la troisième cote est comprise entre 0,5 et 5 mm, en particulier entre 0,5 et 2 mm, par exemple de l'ordre de 1 mm. Une telle plage de variation des troisièmes cotes s'avère suffisante pour compenser les tolérances de fabrication du couvercle de fermeture et du sous-ensemble d'embrayage ;

L'invention a pour objet, selon un autre aspect, une transmission de couple hybride pour un engin de mobilité, comprenant un module de transmission de couple précité et une machine électrique tournante, le couvercle de fermeture comprenant une zone de connexion électrique relié à la machine électrique de sorte que l'axe de rotation de la machine électrique soit décalé de l'axe X de rotation du module de transmission de couple.

La machine électrique est alors dite « off-line ». Notamment, le module de transmission de couple peut être connecté à un machine électrique 48V ou haute tension ;
Cette zone de connexion électrique du couvercle de fermeture est agencée pour recevoir un rotor de moteur électrique concentrique à l'axe X peut être décalée axialement par rapport au premier embrayage et au deuxième embrayage. Cette zone de connexion électrique définit un plan C perpendiculaire à l'axe X de rotation.

Cette disposition permet notamment de ne pas avoir à disposer la machine électrique:
- axialement à la suite des embrayages, ce qui serait négatif pour la compacité axiale, et
- radialement au-delà des embrayages, ce qui serait négatif pour la compacité radiale. On positionne alors la machine électrique en fonction de l'espace disponible dans la chaine de traction du véhicule.

Enfin, l'invention a également pour objet un véhicule automobile comprenant une transmission de couple hybride selon la présente invention.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées :
- [Fig. 1] est une perspective d'un module d'embrayage comprenant au moins un embrayage d'entrée, selon un premier mode de réalisation de l'invention ;
- [Fig. 2] est une coupe axiale du module d'embrayage, selon le premier mode illustré à la [Fig. 1] ;
- [Fig. 3] est une perspective du porte-disques de sortie, selon le premier mode illustré à la [Fig. 1] ;
- [Fig. 4] est une vue détaillée de la liaison emmanchée, selon le premier mode illustré à la [Fig. 1] ; en coupe axiale du module d'embrayage, selon un quatrième mode de réalisation ;
- **[****Fig. 5****]** est une vue détaillée de la liaison emmanchée, selon un deuxième mode de réalisation ;
- [Fig. 6] est une variante détaillée de la liaison emmanchée, selon le deuxième mode de réalisation ;
- [Fig. 7] est une variante détaillée de la liaison emmanchée du deuxième mode de réalisation ;
- [Fig. 8] est une variante détaillée de la liaison emmanchée du deuxième mode de réalisation ;
- [Fig. 9] est une variante détaillée de la liaison emmanchée du deuxième mode de réalisation ;
- [Fig. 10] est une variante détaillée de la liaison emmanchée, selon un troisième mode de réalisation ;
- [Fig. 11] est une variante détaillée de la liaison emmanchée, selon un troisième mode de réalisation ;
- [Fig. 12] est une perspective seule du porte-disques de sortie, selon la Fig. 11 du troisième mode ;
- [Fig. 13] est une coupe axiale détaillée du fond du couvercle de fermeture, selon le premier mode ;
- [Fig. 14] est une vue éclatée du module d'embrayage de la Fig. 13, détaillant en partie sa fermeture, notamment avec le montage du couvercle de fermeture sur l'embrayage d'entrée ;
- [Fig. 15] est une variante axiale détaillée du fond du couvercle de fermeture ;

On entend par :
- un « engin de mobilité », les véhicules automobiles, les véhicules passagers, mais aussi les véhicules industriels, notamment les poids lourds, les véhicules de transport en commun ou les véhicules agricoles, mais également tout engin de transport permettant de faire passer d'un point à un autre un être vivant et/ou un objet ;
- un « embrayage d'entrée », un embrayage de coupure. Au sens de la présente demande, l'embrayage de coupure est celui situé radialement à l'extérieur, au plus loin de l'axe X. Le deuxième embrayage étant celui situé radialement à l'intérieur, c'est-à-dire au plus proche de l'axe X dudit module ;
- un « ensemble multidisques », un ensemble comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, les embrayages décrivant une position débrayée et une position embrayée dans laquelle lesdits plateaux et le disque de friction pincent les garnitures de friction de manière à transmettre un couple entre un porte-disque d'entrée et un porte-disque de sortie ;
- un « élément de calage », toute pièce utilisée pour caler axialement et radialement un organe de roulement en comblant l'espace laissé vacant par ce dernier, par exemple au sein d'un volume libre qui lui est dévolu. Par ailleurs, ce module de transmission peut présenter un unique élément de calage, qui est choisi parmi différentes épaisseurs prédéfinies. Cela suffit car il s'agit de combler le reste d'un volume libre créé par un ensemble de pièces afin de recevoir un organe de roulement ;

Sauf indication contraire : « axialement » signifie « parallèlement à l'axe X de rotation du sous-ensemble d'embrayage préassemblé ou du module de transmission de couple » ; « radialement » signifie « selon un axe transversal coupant l'axe de rotation du sous-ensemble d'embrayage préassemblé ou du module de transmission de couple » ; « angulairement » ou « circonférentiellement » signifient « autour de l'axe X de rotation du sous-ensemble d'embrayage préassemblé ou du module de transmission de couple » ;
Les cotes C1, C2, C3 sont mesurées selon l'axe X de rotation. Tandis que les épaisseurs Ep, Lp sont mesurées selon un axe perpendiculaire à l'axe X de rotation.

On utilisera à titre non limitatif et afin d'en faciliter la compréhension, les termes "intérieur / interne" ou "extérieur / externe" par rapport à l'axe X et suivant une orientation radiale, orthogonale à ladite orientation axiale ; et les termes "arrière" AR et "avant" AV pour définir la position relative d'un élément par rapport à un autre selon la direction axiale, un élément destiné à être placé proche du moteur thermique étant désigné par arrière et un élément destiné à être placé proche de la boîte de vitesses étant désigné par avant. On entend par « porte-disques externe » une série de dents internes s'étendant en direction de l'axe X, et délimitant entre elles des gorges externes. Les dents ou enfoncements sont réalisés depuis la périphérie externe de la tôle.

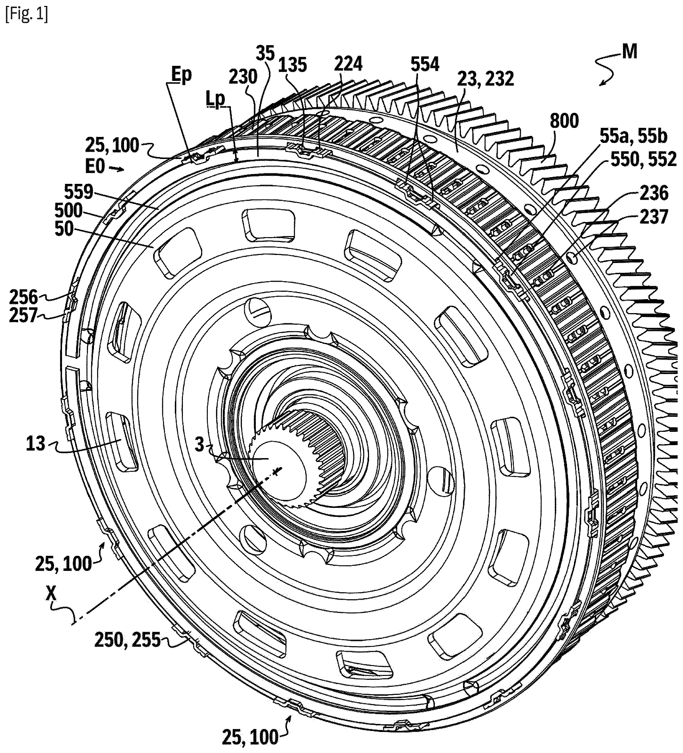

Les Figs. 1 à 4 illustrent un premier mode de réalisation de l'invention. En relation avec les Figs. 1-2, on observe un module M d'embrayage pour transmission de couple, comprenant :
- un élément d'entrée de couple 3 en rotation autour d'un axe X, apte à être couplé en rotation à un vilebrequin d'un moteur thermique (non illustré mais situé à l'avant AV du module M d'embrayage) ;
- un premier élément de sortie de couple, apte à être couplé en rotation à un premier arbre A1 de sortie de couple, situé à l'arrière AR du module M de transmission;
- un deuxième élément de sortie de couple, apte à être couplé en rotation à un deuxième arbre A2 de sortie de couple, c'est-à-dire d'entrée d'une boîte de vitesses situé à l'arrière AR du module M ; et
- un moyeu cylindrique 80 d'alimentation fluidique, notamment d'huile, dit moyeu principal.

Chacun de ces éléments tourne autour d'un axe X de rotation dudit module d'embrayage M. Le moyeu principal 80 d'huile est relié sélectivement à l'élément d'entrée 3 de couple par un embrayage d'entrée E0, au premier élément de sortie de couple par un premier embrayage de sortie E1 et au deuxième élément de sortie de couple par un deuxième embrayage de sortie E2.

Les premiers et deuxièmes éléments de sortie comprennent respectivement un premier et un deuxième voile solidaire en rotation d'un premier et deuxième moyeu. Les premiers et deuxièmes moyeux comprennent des interfaces de sortie dont la périphérie interne est cannelée et apte à coopérer, respectivement avec un premier et un deuxième arbre de boite de vitesses. En outre, le module d'embrayage peut comprendre un dispositif d'amortisseur de torsion (non illustré) pouvant être positionné entre le vilebrequin du moteur thermique et l'élément d'entrée 3 de couple.

Les premiers et deuxièmes éléments de sortie 6, 7 comprennent respectivement un premier et un deuxième voile solidaire en rotation d'un premier et deuxième moyeu. Les premiers et deuxièmes moyeux comprennent des interfaces de sortie dont la périphérie interne est cannelée et apte à coopérer, respectivement avec un premier et un deuxième arbre de boite de vitesses. Notamment un dispositif d'amortisseur de torsion (non illustré) peut être positionné entre le vilebrequin du moteur thermique et l'élément d'entrée 3 de couple.

Le module d'embrayage peut comprendre en outre une série de paliers axiaux 41, 42, 43 :
- un premier palier axial 41 interposé entre l'élément d'entrée 3 et le premier élément de sortie de couple afin de supporter les efforts axiaux de l'élément d'entrée 3 malgré les vitesses de rotation différentes auxquelles peuvent respectivement tourner l'arbre d'entrée et le premier arbre A1 ;
- un deuxième palier axial 42 intercalé axialement entre le premier élément de sortie de couple définissant le porte-disques de sortie 23a de l'embrayage E1 et le deuxième élément de sortie de couple définissant le porte-disque de sortie 23b de l'embrayage E2 pour transmettre une charge axiale entre les deux porte-disques de sortie qui peuvent tourner à des vitesses différentes lorsque les premier et deuxième embrayages E1, E2 sont configurés dans une configuration différente ; et
- un troisième palier axial 43 intercalé axialement entre la portion cylindrique 81 du moyeu principal et le deuxième élément de sortie de couple, ici sur l'extrémité avant AV dudit moyeu principal.

Les paliers axiaux 41, 42, 43 sont respectivement intercalé axialement entre l'élément d'entrée 3 de couple, le premier élément de sortie de couple et le deuxième élément de sortie de couple.

Les paliers axiaux sont configurés pour supporter les efforts axiaux du triple embrayage, ils sont de préférence disposés sur une même hauteur radiale.

Les paliers axiaux 41, 42, 43, se chevauchent radialement. Chaque palier axial 41, 42, 43 présente deux faces frontales, et ils sont des paliers à roulement avec un premier et deuxième disque entre lesquels est disposée une pluralité de corps de roulement, de type butée à aiguilles.

Le module M d'embrayage est composé d'un triple embrayage, pouvant être utilisé dans le cadre de la présente invention et comprenant un embrayage d'entrée E0, un premier embrayage de sortie E1 et un deuxième embrayage de sortie E2. Le premier élément de sortie 6 est disposé en parallèle du deuxième élément de sortie 7 au sens de la transmission de couple.

**L'embrayage** d'entrée E0 se trouve à l'extérieur par rapport au deux embrayages E1, E2 de sortie. Le deuxième embrayage E2 de sortie est disposé à l'intérieur par rapport au premier embrayage E1 de sortie. En variante non illustrée, le premier embrayage peut être disposé axialement à côté du deuxième embrayage. Notamment, l'embrayage d'entrée E0, le premier embrayage E1 et le deuxième embrayage E2 de sortie (ci-après « les embrayages ») sont à l'état ouvert dit « normalement ouvert », actionnés sélectivement en fonctionnement par un dispositif de commande (non illustré) pour passer de l'état ouvert à l'état fermé. En outre, les embrayages E0, E1, E2 sont de type humide et comportent entre deux et sept disques de friction. De tels embrayages multidisques permettent de limiter la hauteur radiale de limiter l'étendue axiale. En particulier, les embrayages de sortie E1, E2 peuvent être agencés pour ne pas être simultanément dans la même configuration embrayée. En revanche, ils peuvent simultanément être configurés dans leur position débrayée.

L'embrayage d'entrée E0, nommé également « embrayage de coupure E0 », comprend en outre :
- un porte-disques d'entrée de couple solidaire en rotation du premier élément d'entrée 3 de couple,
- un porte-disques de sortie de couple solidaire en rotation du moyeu d'alimentation 80, et
- un ensemble multidisque comprenant :
   - plusieurs disques 20 de friction, ici deux, solidaires en rotation d'un bord cylindrique du porte-disque d'entrée, et ; - plusieurs plateaux 10 respectivement disposés de part et d'autre de chaque disque 10b' de friction, solidaires en rotation d'un bord cylindrique du porte-disque de sortie et des garnitures de friction disposées entre les plateaux 10 et un disque 20 de friction, fixées de chaque côté des disques 20 de friction. L'embrayage d'entrée E0 décrit une position débrayée et une position embrayée dans laquelle lesdits plateaux et le disque de friction pincent les garnitures de friction de manière à transmettre un couple entre les portes-disques d'entrée et de sortie.

Dans les exemples considérés, l'embrayage d'entrée E0, le premier embrayage E1 de sortie et/ou le deuxième embrayage E2 de sortie sont empilés et alignés radialement, c'est-à-dire qu'il existe un axe fictif orthogonal à l'axe de rotation X qui passe par les trois embrayages.

De manière analogue, les premier et deuxième embrayage E1, E2 de sortie comprennent chacun :
- un porte-disques d'entrée 13, 23 solidaire en rotation du moyeu d'alimentation 80 ;
- un porte-disques de sortie 16, 26 solidaire en rotation du premier élément de sortie 6 (pour l'embrayage E1 de sortie) ou bien solidaire en rotation du deuxième élément de sortie 7 (pour l'embrayage E2 de sortie) ; et
- un ensemble multidisque comprenant :
   - plusieurs disques 20a, 20b de friction, ici cinq disques 20a (pour l'embrayage E1) et quatre disques 20b (pour l'embrayage E2) solidaires en rotation du porte-disque de sortie 23a, 23b ; et
   - plusieurs plateaux 10a, 10b respectivement disposés de part et d'autre de chaque disque 20a, 20b de friction, solidaires en rotation du porte-disque d'entrée 13a, 13b et des garnitures de friction disposées entre les plateaux et un disque de friction, fixées de chaque côté des disques de friction.

De manière analogue, les embrayages E1 et E2 de sortie décrivent une position débrayée et une position embrayée dans laquelle les plateaux et le disque de friction pincent les garnitures de friction de manière à transmettre un couple entre le porte-disque d'entrée et le porte-disque de sortie correspondants. De manière commune aux trois embrayages E0, E1 et E2, les garnitures peuvent être fixées sur les disques de friction, notamment par collage, rivetage ou surmoulage.

En variante, les garnitures sont fixées sur les plateaux.

Chaque porte-disque 13, 13a, 13b, 23, 23a, 23b peut synchroniser en rotation l'ensemble des disques 20, 20a, 20b de friction ou l'ensemble des plateaux 10, 10a, 10b. Ainsi chaque porte-disques 13, 13a, 13b, 23, 23a, 23b est de forme cylindrique et il comporte une cannelure 130, 230, ayant un profil dentelé particulier, délimité par une alternance de dents et de gorges, afin d'engrener une partie du groupe de disque de l'embrayage E1, E2 respectif, et notamment leurs dents.

Les premier et deuxième portes-disques 13a, 13b forment ici un sous-ensemble de pièces assemblés, comprenant en outre ledit moyeu d'alimentation 80 comprenant en outre un rebord annulaire 17, sur lequel sont rapportés les portes-disques d'entrée 13a, 13b.

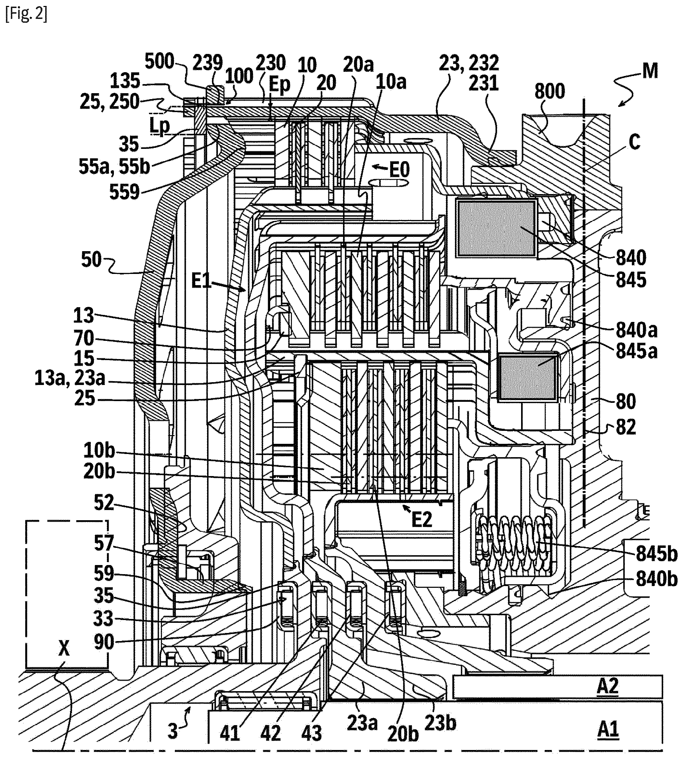

Ces portes-disques d'entrée forment en outre une seule et même pièce monobloc, réalisée d'un seul tenant, tel qu'illustrée sur la Fig. 2. L'actionnement du piston 14, 24 entraine le déplacement axial des plateaux 10, 10a, 10b par rapport aux disques de friction 20, 20a, 20b, pour chaque embrayage E1, E2, E1, E2 respectif, suivant une configuration embrayée.

Dans les exemples illustrés, les moyens de réaction des embrayages E1, E2 de sortie sont formés d'anneaux d'arrêt 15, 25 axial. Chaque anneau d'arrêt axial 15, 25 est inséré dans une gorge qui est formée dans la cannelure du porte-disques 13a, 13b de l'embrayage E1, E2 respectif.

L'anneau d'arrêt axial 15 est ici retenue par un organe de retenue 70 qui s'étend radialement entre les embrayages E1, E2 de sortie. A contrario, un moyen de réaction 559 de l'embrayage d'entrée E0 est formé sur un couvercle de fermeture 50, notamment au niveau de son extrémité radialement externe.

Le porte-disque d'entrée 13 comprend une cannelure 130 interne.

Le porte-disque de sortie 23 comprend une cannelure 230 interne.

Le moyeu principal 80 est relié sélectivement :
- à l'élément d'entrée 3 de couple par un embrayage d'entrée E0,
- au premier élément de sortie 6 de couple par un premier embrayage de sortie E1 et
- au deuxième élément de sortie 7 de couple par un deuxième embrayage de sortie E2.

Le moyeu principal 80 comprend en outre un canal d'alimentation d'huile (non illustré) traversant la portion cylindrique 81 et débouchant dans l'une des cavités annulaires. Ce canal d'alimentation d'huile peut être réalisé par perçage de conduites successives au sein du moyeu d'alimentation d'huile, lesdites conduites étant débouchant les unes dans les autres et agencées pour alimenter en fluide sous pression la chambre de commande des embrayages.

Le fluide peut être de l'huile, par exemple de l'huile de boîte de vitesses.

Par ailleurs, le moyeu principal 80 est couplé en rotation à l'élément d'entrée 3 de couple, lui-même couplé à un arbre menant A0 entrainé en rotation par le vilebrequin d'un moteur, tel que décrit précédemment, et que l'embrayage d'entrée E0 est fermé, alors le moyeu principal 80 est animé d'un mouvement de rotation analogue à celui de l'arbre moteur. Les embrayages E0, E1, E2 sont chacun commandés par un système d'actionnement agencé pour pouvoir configurer les embrayages dans une configuration quelconque comprise entre la configuration embrayée et la configuration débrayée.

Pour commander sélectivement le changement d'état des embrayages, le dispositif de commande gère l'alimentation en huile. Un tel dispositif de commande est raccordé au moyeu d'alimentation d'huile 80 qui comprend le réseau de passage de fluide 86. A chaque embrayage E0, E1, E2 est associé un système d'actionnement. Chaque système d'actionnement comprend en outre :
- une chambre de pression agencée pour recevoir un fluide pressurisé ;
- un piston 840, 840a, 840b mobile axialement à l'intérieur de la chambre de pression ; et
- une chambre d'équilibrage située à l'opposé de la chambre de pression par rapport audit piston ;

A chaque système d'actionnement est associé un élément de rappel élastique 845, 845a, 845b agencé pour générer un effort axial s'opposant au déplacement du piston 840, 840a, 840b correspondant pour embrayer l'embrayage E0, E1, E2 correspondant. L'élément de rappel élastique est une rondelle Belleville ou composé de ressorts hélicoïdaux, tels que la Fig. 2.

Ceci permet de rappeler automatiquement le piston en position débrayée, correspondant à un état ouvert de l'embrayage. Dans cette position, le piston libère axialement l'ensemble multidisque qui ne transmet alors plus de couple en direction du premier arbre mené A1 ou du deuxième arbre mené A2 d'une boite de vitesses (nommés aussi arbres d'entrée d'une boite de vitesse).

Par ailleurs, les chambres de pression des systèmes d'actionnement sont agencées pour recevoir un certain volume de fluide hydraulique sous pression afin de générer un effort axial sur un piston et de configurer ainsi l'embrayage correspondant dans l'une des configurations décrites précédemment.

Le piston 840, 840a, 840b d'actionnement de chaque embrayage peut être contrôlé par un capteur interne de position venant contrôler l'embrayage ou par mesure de la pression hydraulique lors de la fermeture de l'embrayage ou par mesure du volume de fluide injecté ou par mesure d'une grandeur de déplacement lors de la fermeture de l'embrayage. Chaque piston est disposé axialement entre une chambre de pression et une chambre d'équilibrage.

Le moyeu d'alimentation 80 alimente en huile l'embrayage d'entrée E0, le premier embrayage E1 de sortie et le deuxième embrayage E2 de sortie. Le moyeu d'alimentation 80 comprend en outre :
- une portion cylindrique, un flasque 82 s'étendant radialement depuis la portion cylindrique,
- un support de fermeture s'étendant radialement depuis le flasque 82 en direction de l'élément d'entrée 3. Le support de fermeture comprend une zone de connexion électrique relié à une machine électrique tournante de sorte que l'axe de rotation de la machine électrique soit décalé de l'axe X ;
   - une première cavité annulaire disposée sur le côté du flasque et agencé pour recevoir un piston d'actionnement du premier embrayage de sortie E1,
   - une deuxième cavité annulaire disposé du même côté du flasque que la première cavité annulaire et agencé pour recevoir un piston d'actionnement du deuxième embrayage de sortie E2 ; et
   - une troisième cavité annulaire disposé radialement au-delà des deux autres cavités annulaires et agencée pour recevoir un piston d'actionnement de l'embrayage d'entrée E0.

Cette zone de connexion électrique définit un plan C perpendiculaire à l'axe X de rotation.

La machine électrique peut être une machine synchrone à aimants permanents. La machine électrique est ainsi reliée sélectivement à l'élément d'entrée 3 de couple par l'embrayage d'entrée E0, au premier élément de sortie de couple par le premier embrayage E1 et au deuxième élément de sortie de couple par le deuxième embrayage E2.

Le porte-disque de sortie 23 comprend en outre :
- une cannelure 230 définissant :
   - une portion d'entraînement destinée à coopérer par engrènement avec une partie des disques 10,
   - une série de pattes 25, de formes cannelées et issues du prolongement (axial) de la cannelure 230 ;
- un fond définissant une portion de fixation 231, qui est rendue solidaire du moyeu principal 80,
- un épaulement reliant la portion de fixation 231 à la cannelure 230.

Le porte-disque de sortie 23 est de préférence de forme étagée : La cannelure 230, et notamment la portion d'entraînement, sont décalées axialement par rapport à la portion de fixation 231. En variante non illustrée, la cannelure et notamment la portion d'entraînement présente(nt) une longueur axiale égale à au moins 70% d'une dimension axiale du porte-disques de sortie 23 pris dans son ensemble.

Cette portion de fixation 231 est la portion du porte-disque de sortie 23 la plus proche de l'axe X.

Cette portion de fixation 231 est monté sur le moyeu principal 80 via la zone de connexion 800, et notamment via un rebord d'appui cylindrique de la zone de connexion 800 adapté à cet effet. La portion de fixation 231 et le moyeu principal 80 sont fixés ensemble bout à bout solidairement, par une liaison démontable ici par coopération de forme, ou en variante, par rivetage, par clipsage, ou même par soudure (de type laser).

Le porte-disque de sortie 23 comprend en outre deux séries d'orifices 236, 237 d'évacuation de l'huile, distinctes, qui sont formées sur la portion d'entraînement 232, et avantageusement sur l'épaulement 232. Les premiers orifices 236 sont agencés en une première série d'orifices sur le pourtour du porte-disques 23, ici la portion d'entraînement, selon une répartition angulaire régulière, c'est-à-dire avec un intervalle régulier entre les premiers orifices sur tout le pourtour du porte-disques.

De manière analogue, les deuxièmes orifices 237 sont agencés en une deuxième série d'orifices sur le pourtour du porte-disques 34, ici l'épaulement, selon une répartition angulaire régulière. Le nombre **de premiers** orifices 236 est supérieur au nombre de deuxièmes orifices 237, par exemple ici un ratio d'un deuxième orifice pour deux premiers orifices.

Le couvercle de fermeture 50 est de forme cylindrique de révolution et se développe axialement parallèlement à l'axe X, à côté de l'élément d'entrée 3, de préférence au plus près de ce dernier.

Ce couvercle de fermeture s'étend radialement le long des embrayage d'entrée E0 et de sortie E1, E2. A titre d'exemple, son épaisseur est ici sensiblement constante sur l'ensemble du couvercle 50.

Ce couvercle de fermeture est ici disposé axialement entre l'arbre A0 et l'élément d'entrée 3. Le couvercle de fermeture est exempté de transmission de couple, c'est-à-dire qu'il n'assure pas la transmission de couple entre les arbres A0 et A1, A2. En d'autres termes, il est distinct et éloigné de l'élément d'entrée 3 de couple et des premier et deuxième éléments de sortie de couple.

Dans les exemples illustrés, le couvercle de fermeture 50 présente :
- un fond 52, en regard de l'élément d'entrée 3, qui relie les extrémités interne et externe ;
- une portion de cylindre interne 57, proche de l'axe X, qui s'étend du côté arrière AR du module M. Le fond 52 est délimité par la portion de cylindre interne 57, de sorte à délimiter en partie le volume libre V0. Le fond du couvercle de fermeture peut être circonférentiellement continue autour de l'axe X ; et
- une extrémité radialement externe, éloignée de l'axe X et qui s'étend du côté arrière AR. L'extrémité radialement externe présente un bord cylindrique externe, de forme de révolution.

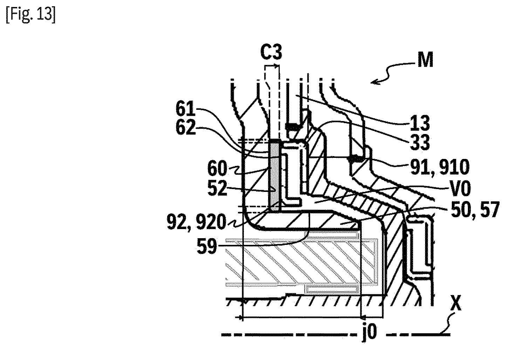

De manière avantageuse sur les Figs. 13-15 le couvercle de fermeture 50 délimite axialement avec l'élément d'entrée 3 un volume libre V0 à l'intérieur duquel sont disposés un organe de roulement 90 et un élément de calage 60 d'épaisseur prédéfini dit troisième cote pour l'organe de roulement.

Dans les exemples illustrés, l'élément d'entrée 3 présente : une paroi d'appui, et une portion de pré-centrage 33 entourant la paroi d'appui circonférentielle.

Ces derniers délimitent en partie le volume libre V0 à l'intérieur duquel sont disposés un organe de roulement et un élément de calage de l'organe de roulement. La portion de pré-centrage 35 peut être discontinue, formée parmi un série d'ergots. En particulier, la portion de pré-centrage 35 entoure l'organe de roulement 90, de sorte à centrer ce dernier.

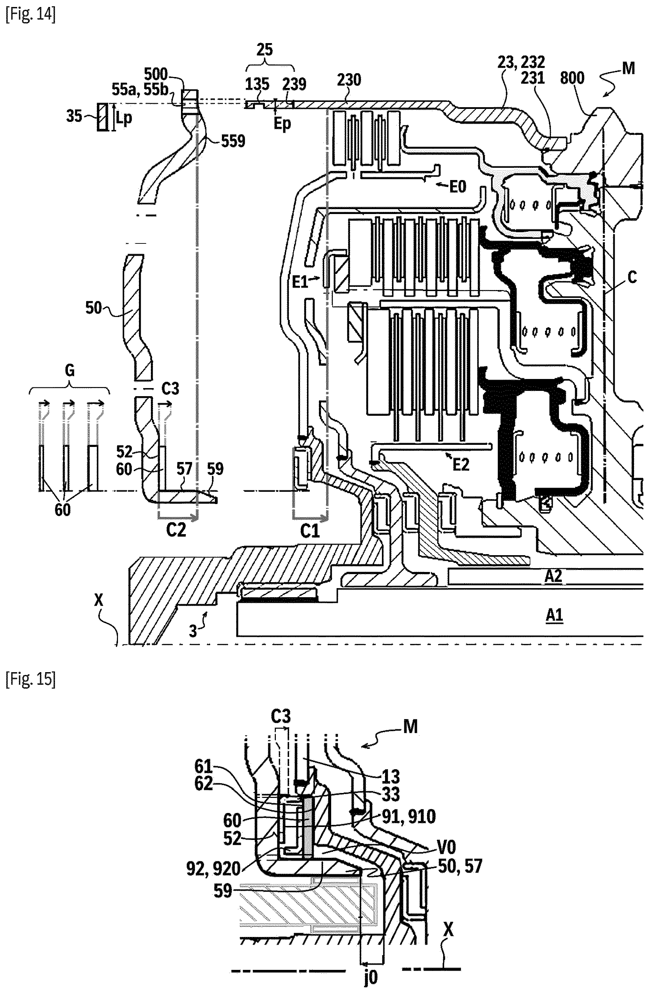

Le [Fig. 13] illustre un élément de calage 60 monté préalablement, ici centré, dans le fond 52 du couvercle de fermeture. A l'inverse, la [Fig. 15] illustre un organe de roulement 90 monté préalablement, ici centré, dans le fond 52 du couvercle de fermeture.

Dans les exemples illustrés, l'élément de calage 60 est monté serré ou centré avec le couvercle 50, afin d'ajuster la position finale du couvercle de fermeture par rapport au sous-ensemble d'embrayage.

Lorsque le roulement 90 est disposé à l'intérieur du volume libre V0, un jeu est laissé vacant.

De ce fait, l'élément de calage 60 est remarquable en ce qu'il comprend une épaisseur prédéfinie, dit troisième cote C3 à sélectionner, afin de combler le jeu laissé vacant par le roulement, pour arriver à une côte finale qui assure les fonctionnalités exigées du triple embrayage 2.

En outre, l'élément de calage 60 permet d'éviter un contact entre ces pièces tournantes à des vitesses différentes. Les pièces préassemblées sont espacées de sorte de ne pas interférer avec le couvercle 50, selon une certaine marge de sécurité j0. La troisième cote C3 est définie axialement entre les faces latérales 61, 62 opposées de l'élément de calage 60. A titre d'exemple, la troisième cote C3 est ici strictement inférieure à l'épaisseur du roulement 90.

Dans les exemples illustrés, le roulement 90 est préassemblé sur l'élément d'entrée 3. La face frontale arrière 91 du roulement coopère alors intégralement avec la paroi d'appui 34 circonférentielle. Le roulement 90 comporte en outre une bague externe 910 et une bague interne 920, chacune formant une piste de roulement respectivement interne et externe, délimitant ainsi un espace de roulement dans lequel sont logées des billes permettant la rotation relative entre la bague interne et la bague externe. Par ailleurs, le roulement 90 est ici maintenu par des appuis opposés radialement et diamétralement, formés respectivement par l'élément d'entrée 3 et par l'élément de calage 60. L'élément d'entrée 3 peut comprendre une gorge 33 à l'intérieur de laquelle le roulement 90 est logé.

Le roulement 90 présente axialement de part et d'autre:
- une face frontale arrière 91 située à l'arrière AR, montée en appui contre l'élément d'entrée 3, et
- une face frontale avant 92 opposée, située à l'avant AV du module, en appui contre l'élément de calage. Une épaisseur ER du roulement 90 est définie axialement entre les face frontales arrière 91 et avant 92. La face frontale arrière 91 est ici formée par la bague externe 910. La face frontale avant 92 est ici formée par la bague interne 920.

A titre d'exemple, la bague externe 910 peut être montée en force sur l'élément d'entrée 3 de couple. Lors du montage du triple embrayage 2, la bague externe 910 du roulement 90 est préalablement :
- centré par la portion de pré-centrage 35, et
- en appui axial contre la paroi d'appui 34 circonférentielle.

L'élément de calage 60 réalise un appui axial sur l'intérieur de l'organe de roulement 90, ici sur la bague interne 920. On maintient le diamètre intérieur du roulement 90, et notamment la face frontale avant 92.

Par ailleurs, l'élément d'entrée 3 réalise un appui axial sur l'extérieur du roulement 90, ici sur la bague externe 910. On maintient le diamètre extérieur du roulement 90, et notamment la face frontale arrière 91. Cet élément de calage 60 est sélectionné parmi une gamme G d'éléments de calage de différents calibres, avant d'être monté pour être supporté et centré sur la portion de cylindre interne 57. Cet élément de calage 60 disposé axialement entre
- d'une part, de l'une des faces frontales 91, 92 du roulement 90, et
- d'autre part, de l'un parmi le couvercle de fermeture 50 et de l'élément d'entrée 3 de couple.

Pour fermer le module M d'embrayage, le couvercle de fermeture 50 est assemblé au porte-disques de sortie 23 de l'embrayage d'entrée E0, fixés ensemble bout à bout par plusieurs liaisons dont l'emmanchement. Ainsi le porte-disques de sortie 20 et le couvercle de fermeture 50 sont liés solidairement ensemble, au moins radialement, par une liaison emmanchée 100. Cette liaison emmanchée 100 assure une connexion fixe et démontable du couvercle de fermeture 50 à postériori.

En outre, cette liaison emmanchée 100 est maintenue fixe par un anneau d'arrêt 35 axial, de préférence d'épaisseur constante ou bien variable, qui est inséré dans une gorge 135 réalisée dans le porte-disque de sortie 23, de préférence dans la cannelure 230.

L'anneau d'arrêt axial35 est de forme annulaire et ouverte, généralement fendue pour être monté en partie dans le fond de ladite gorge 135. L'anneau d'arrêt axial 35 comprend ainsi deux extrémités libres, entre lesquelles sont délimitée une ouverture, réalisée sous forme de fente.

La gorge 135 de l'anneau d'arrêt 135 axial est ouverte radialement sur l'intérieur, en étant formée depuis le diamètre intérieur de la cannelure 230. Ceci afin que l'anneau d'arrêt 135 ne s'échappe pas de la gorge 135 sous l'effet centrifuge de l'embrayage. Aucune autre pièce de retenue n'est requise. En particulier, cette gorge 135 est circonférentiellement discontinue autour de l'axe X.

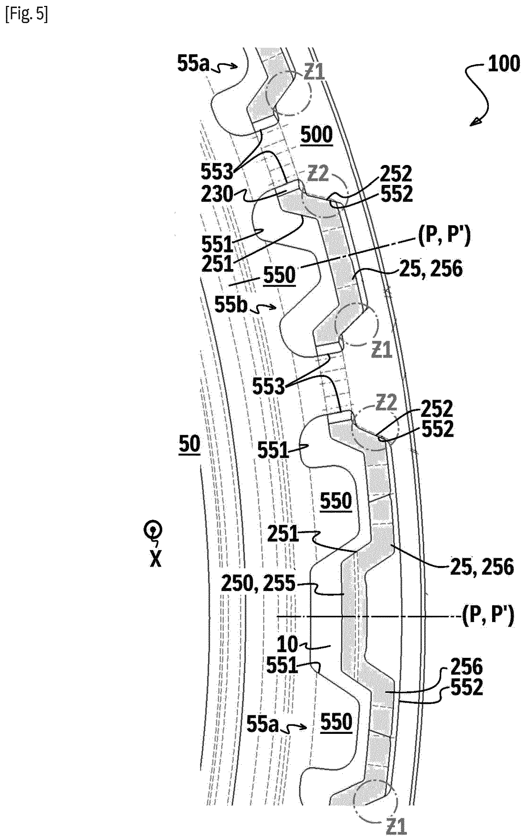

Les Figs. 5 à 11 illustrent différents modes de réalisation de liaison d'emmanchement, avec des alternatives de formes et de montage, qui sont sensiblement proches du premier mode de réalisation.

Par ailleurs, le couvercle de fermeture 50 est monté en pré-charge axiale au niveau de la liaison emmanchée avec le porte-disques emmanché, ici de sortie 23 de couple. Egalement le moyen de réaction 559 du couvercle, disposé en deçà de la zone emmanchée du couvercle de fermeture, est monté en pré-charge axiale au niveau des disques de l'ensemble multidisques de l'embrayage d'entrée.

On exerce sous presse une force de pré-charge axiale supérieure ou égale à 100 Newton, réalisée une fois le couvercle emmanché, par déformation axiale sous enfoncement du couvercle de fermeture. **Sous cette** force de pré-charge (presse), le fond du couvercle de fermeture est inchangé, maintenu grâce à l'ensemble des pièces empilées, ici un élément de calage 60 et un organe de roulement 90. A l'inverse, la zone emmanchée du couvercle de fermeture, et notamment le moyen de réaction 559 du couvercle, sont enfoncés et rapprochés de l'embrayage d'entrée, et en particulier du plan C de la zone de connexion électrique du moyeu d'alimentation 80. D'où leur montage en pré-charge axiale.

Par ailleurs, le porte-disque de sortie 23 est formé par découpage et emboutissage d'une seule tôle. L'espace délimité entre les pattes cannelées forme des échancrures 239 à l'intérieur desquelles le couvercle est monté en appui, et notamment monté emmanché.

Ces échancrures 239, ici au nombre de quinze, sont ménagées par découpage, depuis l'extrémité libre du porte-disque de sortie 23, afin de former ces pattes cannelées 25, au nombre de quinze.

La profondeur des échancrures 239, définit la longueur de découpe de la tranche de deux pattes cannelées immédiatement adjacentes. La profondeur des échancrures définit au moins en partie la position axiale finale du couvercle par rapport au porte-disque de sortie 23.

A titre d'exemple, l'espace angulaire délimité entre dents ou échancrure, peut être de dimension supérieure ou égale à 1 mm, par exemple 2 mm. Les échancrures 239 sont de formes identiques. En variante non illustrée, les échancrures peuvent être de formes variables, par exemple réalisées en deux séries distinctes, ce qui tend à rapprocher ou écarter certaines des pattes entre elles.

Pour réaliser la liaison emmanchée 100, le couvercle de fermeture 50 comprend au moins une série d'ouvertures ici sous forme de fenêtres 55A, 55B au travers desquelles la cannelure 230 est emmanchée, notamment en force. Les fenêtres sont réparties angulairement autour de l'axe X, selon une répartition régulière ou uniforme. Ces fenêtres 55A, 55B, au nombre de quinze, sont ménagés par découpage de l'extrémité radialement externe, notamment du bord cylindrique externe du couvercle. Dans le premier mode, les fenêtres 55A, 55B sont réparties en une seule série, de préférence réparties le long d'un cercle d'implantation C1, de centre l'axe X. La cannelure 230 du porte-disque de sortie 23, et notamment les dents internes, définissent ce cercle d'implantation C1 des fenêtres. Alternativement, ces fenêtres 55A, 55B peuvent être réparties en deux séries, de préférence en étant disposées le long d'un même cercle d'implantation C1. Au moins certaines des fenêtres 55A, 55B soient rapprochées l'une de l'autre ou au contraire écartées angulairement l'une de l'autre.

On définit deux séries de fenêtres 55A, 55B du couvercle de fermeture de la manière suivante :
- les fenêtres 55A d'une première série peuvent emmanchées la cannelure (et notamment des pattes cannelées) du porte-disques 23 dans un premier sens A de rotation relative, et
- les fenêtres 55B d'une deuxième série peuvent emmanchées la cannelure (et notamment des pattes cannelées) du porte-disques 23 dans un deuxième sens B de rotation relative. Ces deux sens A, B de rotation relative (horaire, antihoraire) sont définis suivant le sens de rotation de l'axe X du module M.

Le contour fermé de chaque fenêtre 55A, 55B est délimitée par :
- un bord radialement intérieur 551, de forme arquée ou rectiligne,
- un bord radialement extérieur 552, de forme arquée ou rectiligne, et
- deux bords latéraux 553, de formes rectilignes, délimitant angulairement ladite fenêtre ;

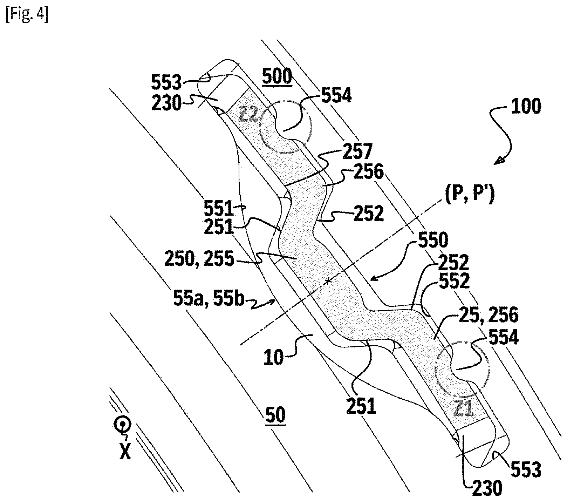

Le bord radialement intérieur 551 d'une fenêtre peut être creusée, de forme concave, par exemple en arc de cercle ou de demi-lune. On y observe alors une partie externe du disque d'extrémité de l'ensemble multidisque de l'embrayage d'entrée E0, ici l'extrémité des dents du plateau 10 (voir les Figs. 4-8). Les bords latéraux 553 délimitent angulairement une extension angulaire β1 de fenêtre.

Dans le premier mode, les fenêtres 55A, 55B du couvercle de fermeture sont réparties angulairement selon une répartition régulière, par exemple selon un écart angulaire compris entre 1,5 et 3 fois l'extension angulaire β1 de ladite fenêtre.

**Par** ailleurs, le couvercle de fermeture 50 comprend un bandeau 500, radialement externe, qui assure la retenue radiale du porte-disque de sortie 23, c'est-à-dire son maintien en centrifugation.

Pour ce faire, le bandeau externe 500 s'étend radialement, au-delà de l'embrayage d'entrée E0, en étant de préférence délimité depuis le porte-disque de sortie 23, et notamment depuis les fenêtres 55A, 55B. Le bandeau externe 500 du couvercle présente ainsi une élongation radiale dite épaisseure Lp qui est 1,5 fois supérieure à l'épaisseur Ep du porte-disque de sortie 23. Grâce à ce bandeau 500 épaissi, on empêche la cannelure 230, et notamment les dents, de trop se déformer.

Chaque patte cannelée 25 s'étend radialement entre au moins :
- une portion proximale 255 qui définit une dent 250 interne issue du prolongement de la cannelure 230. Les dents de la cannelure 230, et celle(s) des pattes cannelées 25, sont réalisées par enfoncement de matière depuis l'extérieur, par exemple par formage à froid grâce à des rouleaux profilés ; et
- une portion distale 256 qui définit au moins partiellement une gorge 257 externe issue du prolongement de la cannelure 230. Les dents délimitent entre elles les gorges. Les gorges de la cannelure 230, et celle(s) des pattes cannelées 25, sont donc exemptées d'enfoncement de matière.

Chaque dent 250 est délimité par au moins un flanc radialement intérieur 251. L'enfoncement résultant à partir duquel ladite dent 250 a été réalisée, délimite au moins un flanc radialement extérieur 252. En outre, chaque patte cannelée 25 est délimitée angulairement entre deux tranches 253 ou parois latérales. On entend par flancs intérieur 251 et extérieur 252, des surfaces d'appui inclinées parallèles entre elles de sorte à définir une portion de matière reliant une portion proximale 255 à une portion distale 256 d'une même patte cannelée.

En outre, le nombre de flancs intérieurs 251 est identique au nombre de flancs extérieurs 252. Pour une même patte cannelée 25, le nombre de dents 250 (i.e. portions proximales 255) peut être limité à deux, et le nombre de gorges 257 (i.e. portions distales 256) peut être limité à trois. De préférence, le nombre de flancs intérieurs 251 est deux fois celui des dents 150.

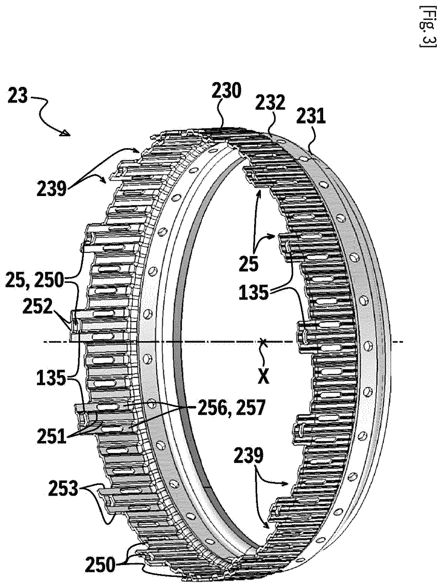

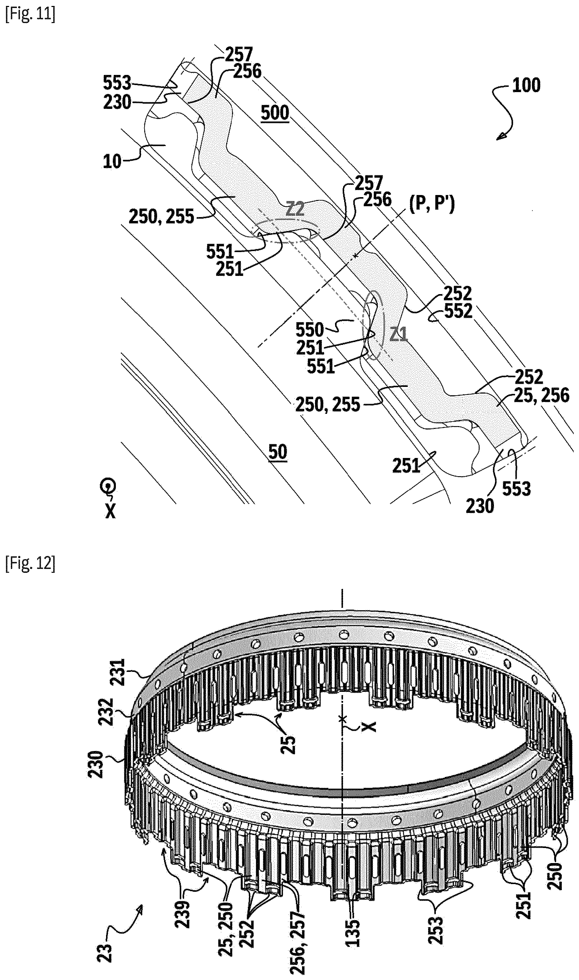

On a représenté seul le porte-disque de sortie 23 avant assemblage, sur les Figs. 3 et 12 de différents modes. Ainsi les pattes cannelées 25 peuvent être de formes identiques. Ceci simplifie le montage de la liaison emmanchée et sa standardisation. En outre, la gorge 135 de l'anneau d'arrêt 35 axial est réalisée dans l'ensemble des pattes cannelées, en particulier dans l'ensemble des dents 250.

Notamment sur la Fig. 3, chaque patte cannelée 25 comprend une seule dent 250, c'est-à-dire une seule portion proximale 255, et deux gorges 257, c'est-à-dire deux portions distales 256.

En variante illustrée sur la Fig. 11, les pattes cannelées 25 peuvent être de formes variables, par exemple réalisées en deux séries distinctes. Certaines pattes cannelées peuvent ainsi ne pas comprendre de dent ni de gorge pour loger l'anneau d'arrêt 35 axial.

Afin d'améliorer la liaison emmanchée 100, le porte-disque de sortie 23 et le couvercle de fermeture 50 peuvent être réalisés dans des matériaux différents.

Le porte-disque de sortie peut être d'une dureté supérieure à 2 fois celle du couvercle de fermeture, de préférence d'une dureté qui est comprise entre 2 et 8 fois celle du couvercle de fermeture. On évite toute déformation plastique de la cannelure et des pattes cannelées.

Chaque patte cannelée 25 est reçue à l'intérieur d'une fenêtre 55A, 55B du couvercle de fermeture 50. Au moins certaines des pattes cannelées 25 sont emmanchées au travers de fenêtres 55A, 55B.

Une patte cannelée 25 peut être de forme symétrique. Chaque patte cannelée 25 peut comprendre en section radiale un plan P de symétrie qui passe par son milieu ou centre de gravité G. Le plan P de symétrie d'une patte cannelée 25 passe ici par l'axe X. En variante, il peut être parallèle à l'axe X.

Chaque fenêtre comprend un ou deux bord(s) depuis laquelle (ou lesquelles) est emmanchée en partie une patte cannelée 25, par exemple une dent 250 ou une gorge 257 de ladite patte cannelée. Ainsi l'ensemble des pattes cannelées 25 est emmanché au travers des fenêtres 55A, 55B.

Une fenêtre 55A, 55B peut être de forme symétrique. Chaque fenêtre 55A, 55B peut comprendre en section radiale un plan P' de symétrie qui passe par en son centre ou milieu du contour fermé. Le plan P' de symétrie d'une fenêtre 55A, 55B passe ici par l'axe X. En variante, il peut être parallèle à l'axe X. Dans le premier mode, la liaison emmanchée 100 est réalisée sur une ou plusieurs gorges 257 de la patte, en particulier depuis des portions distales 256 de la patte cannelée 25.

L'espace délimité entre deux fenêtres forme un bras de liaison. Le couvercle de fermeture comprend une série de bras de liaison, notamment reliant le fond et le bandereau de part et d'autre.

Chaque patte cannelée 25 est remarquable en ce qu'elle comprend uniquement deux zones de serrage Z1, Z2 espacées l'une de l'autre pour réaliser au moins radialement la liaison emmanchée.

En outre, l'espace entre ces deux zones de serrage peut définir des zones d'ajustement libre. Autrement dit, des portions depuis lesquelles la patte cannelée 25 est reçue avec jeu au travers de la fenêtre 55A, 55B. Ceci simplifie les étapes de montage et de démontage de la liaison emmanchée 100.

En outre, la liaison emmanchée 100 d'une patte cannelée 25 est réalisée depuis :
- une première zone de serrage Z1 définie sur une portion distale 256, notamment une gorge 257 ; et
- une deuxième zone de serrage Z2 définie sur une portion distale 256, notamment une autre gorge 257. Les zones de serrages Z1, Z2 de la liaison emmanchée 100 sont localisées différemment.

Ces zones de serrage Z1, Z2 sont angulairement opposées, notamment par rapport au plan P.

Ces deux zones de serrage Z1, Z2 d'une patte cannelée 25 sont avantageusement disposées de part et d'autre du plan P de symétrie d'une patte cannelée.

Dans le premier mode, les zones de serrage Z1, Z2 d'une patte cannelée 25 sont disposés de manière symétrique par rapport aux plans P, P de symétrie. A titre d'exemple au niveau de la zone de serrage Z1, la portion distale 256 ou gorge 257 à emmancher comprend une surface plane distale de la patte cannelée 25. De manière analogue, au niveau de la zone de serrage Z2, la portion distale 256 ou gorge 257 à emmancher peut comprendre une autre surface plane distale de la patte cannelée.

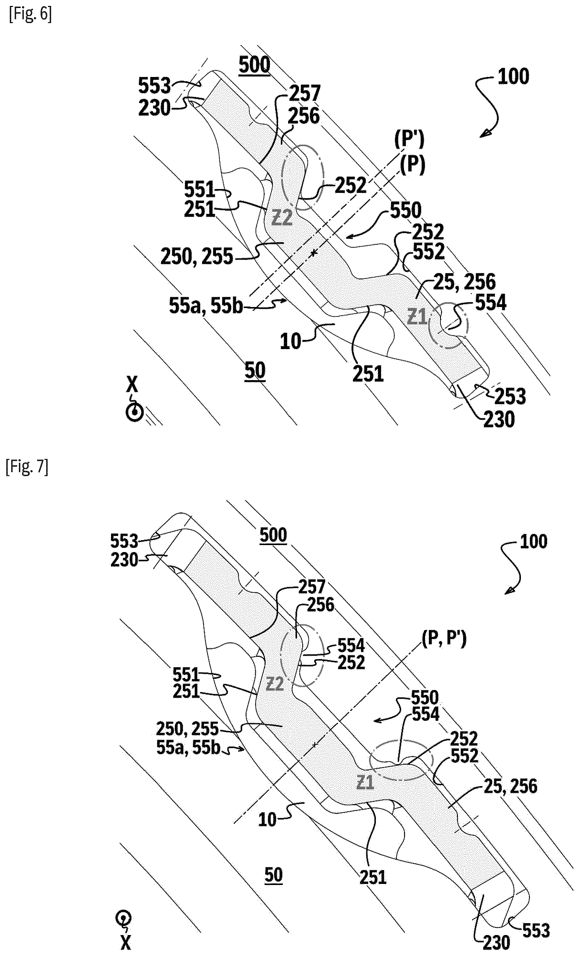

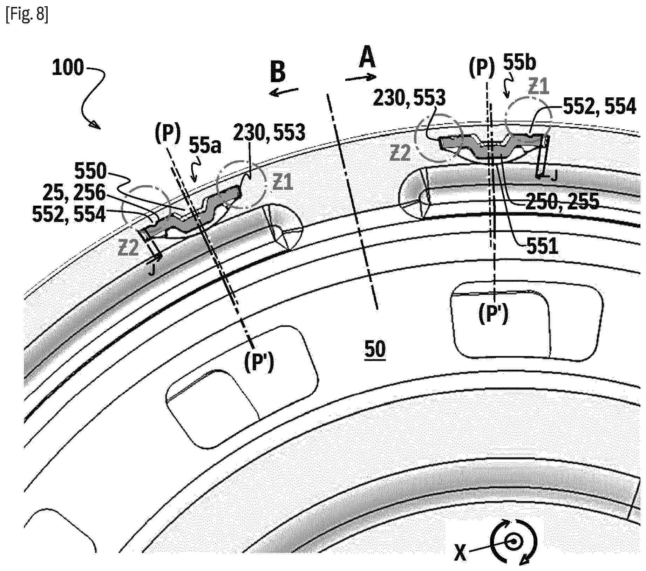

Les pattes cannelées 25 sont de formes complémentaires à celles des fenêtres 55A, 55B. Le contour fermé d'une fenêtre 55A, 55B peut être dentelée et complémentaire à la forme cannelée d'une patte. Dans le premier mode réalisant la liaison emmanchée, la patte cannelée peut être centrée au centre d'une fenêtre 55A, 55B, en particulier centrée angulairement. Dès lors les plan P, P' respectivement de la patte cannelée et de la fenêtre se confondent. A contrario tel qu'illustré sur les Figs. 6 et 8, il est possible de décaler angulairement la patte pour réaliser un autre type de liaison emmanchée. Les plan P, P' sont alors distincts, c'est-à-dire espacés et/ou parallèles l'un de l'autre.

Dans les exemples illustrés, chaque fenêtre 55A, 55B du couvercle 50 comprend au moins une crête 550 d'extension radiale, de forme complémentaire avec une partie d'une dent 250 ou d'une gorge 257 d'une patte cannelée 25. Avantageusement, cette crête 550 d'extension radiale interne vient emmancher une portion distale 256, ici celle d'une gorge 257 de la patte cannelée 25.

Dans le premier mode, la fenêtre 55A, 55B comprend une unique crête 550 qui est formée depuis le bord extérieur 552 et s'étend radialement vers l'intérieur. En outre, cet unique crête 550 s'étend au centre de la fenêtre, c'est-à-dire de part et d'autre du plan P', sous une forme symétrique.

Par ailleurs, la fenêtre 55A, 55B comprend au moins une portion renflée 554, ici au nombre de deux sur la Fig.4, chacune étant disposée d'un côté des plans P, P' de symétrie et formée notamment depuis le bord extérieur 552. Avantageusement, chaque portion renflée 554 d'extension radiale interne vient emmancher une des portions distales 256, ici celle d'une des gorges 257.

Chaque fenêtre 55A, 55B peut comprendre deux portions renflées 554, depuis lesquelles est emmanchée en partie une patte cannelée 25.

Dans le premier mode, deux portions emmanchées distinctes et espacées, de préférence espacées d'une seule dent 250 ou crête 550. Dès lors chaque portion renflée 554 d'extension radiale interne vient emmancher une portion distale 256, ici celle d'une gorge 257.

Les deux zones de serrage Z1, Z2 et notamment les portions renflées 554, peuvent être disposées de manière symétrique de part et d'autre du plan P' de la fenêtre. Les zones de serrage Z1, Z2 sont alors angulairement opposées, et disposées sur un même diamètre, ici le bord extérieur 552 illustré en Fig.4. Avantageusement, chaque crête 550 et/ou portion renflée 554, peut être réalisée depuis un seul bord de la fenêtre 55A, 55B, à partir du bord extérieur 552 de la fenêtre.

Avantageusement, les pattes cannelées 25, en particulier les portions distales 156 ou gorges 157, peuvent comprendre chacune une rainure 254, issue de préférence de la cannelure 230.

Ces rainures 254 sont réalisées dans le prolongement de la portion d'entrainement, notamment ménagées sur les portions distales 156 ou gorges 157.

Une telle rainure 254 est de préférence réalisée ouverte radialement vers l'extérieur, de préférence au niveau d'une portion distale 156 ou gorge 15, de telle manière à coopérer avec le bord extérieur 552 de la fenêtre 55a, 55b. Les rainure 254 sont de préférence longitudinalement, parallèles entre elle, s'étendant dans la direction axiale, en particulier depuis la cannelure 230.

Au moins certaines pattes cannelées 25 comprennent des rainures 254 à l'intérieur de laquelle est reçue des portions renflées 554, comme illustrée sur les Figs. 1 et 4. Dès lors, cette coopération de forme permet d'aligner et de centrer ladite patte par rapport à la fenêtre.

Chaque patte cannelée 25, et notamment chaque portion distale 156 ou gorge 157, comprend une rainures 254 à l'intérieur de laquelle est reçue une portion renflée 554.

Chaque portion renflée 554 est de forme complémentaire à celle d'une rainure 254. Ainsi chaque patte cannelée 25 comprend deux rainures 254 disposées de part et d'autre du plan P de la patte, de préférence de manière symétrique. Les dents des pattes peuvent être exemptées de rainure.

On va maintenant décrire le procédé d'assemblage pour fermer le module d'embrayage M, selon le premier mode de réalisation illustré aux Figs. 1 à 4 et Figs. 12 à 13.

Durant une première étape a) on fournit un sous-ensemble d'au moins un embrayage E0, E1, E2, comportant en outre :
- un porte-disques d'entrée 13 de couple notamment d'un embrayage d'entrée E0,
- un élément d'entrée 3 de couple,
- un moyeu cylindrique 80 et un porte-disques de sortie de couple comprenant une cannelure 230 ;

Le sous-ensemble d'au moins un embrayage E0, E1, E2 peut comprendre en outre :
- un élément de calage 60, notamment d'épaisseur prédéfinie, destiné à ajuster la position axiale du couvercle de fermeture 50 par rapport au sous-ensemble ;
- un roulement 90 préalablement positionné en appui sur l'élément d'entrée 3, le roulement 90 présentant une face frontale arrière 91 et une face frontale avant 92 opposée.

Durant une deuxième étape a) on fixe solidairement en rotation le porte-disques d'entrée 13 sur le l'élément d'entrée 3, notamment par soudure de type laser, ou par friction ou avec apport de matière.

Durant une troisième étape c) on fixe solidairement en rotation le porte-disques de sortie 23 sur le moyeu cylindrique 80, par coopération de formes ou par soudure notamment de type laser.

Durant une quatrième étape d) on fournit : un couvercle de fermeture 50, exempté de transmettre le couple, le couvercle servant simplement à fermer le sous-ensemble cité du module d'embrayage ; et un anneau d'arrêt 35 axial, de type fendu, par exemple une rondelle élastique d'épaisseur constante.

Durant une cinquième étape e) on réalise un assemblage par emmanchement du couvercle de fermeture 50 et de la cannelure 230 du porte-disques de sortie 23, dite liaison emmanchée 100.

Puis on vient retenir cette liaison emmanchée 100 par l'anneau d'arrêt 35 axial, de sorte à réaliser une liaison clipsée. Notamment, l'anneau d'arrêt 35 axial est inséré en partie dans une gorge 135 formée dans le porte-disques de sortie 23, en particulier dans les dents 250 des pattes cannelées 25.

En particulier on peut préalablement découper,
- en extrémité libre de la cannelure 230, des échancrures 235 à l'intérieur desquelles le couvercle de fermeture 50 sera ensuite emmanchée en force selon l'étape e). On délimite entre les échancrures des pattes cannelées destinées à être emmanchées au travers du couvercle 50 ;
- au sein du couvercle de fermeture 50, des fenêtres 55A, 55B au travers desquelles la cannelure 230, et notamment les pattes cannelées 25 seront ensuite emmanchée en force selon l'étape e).

En particulier durant l'étape e), le couvercle de fermeture 50 est enfilé axialement sur l'élément d'entrée 3 de couple avant d'être ensuite emmanchée sur la cannelure 230 du porte-disques de sortie. Par « enfilement » ou « couvercle enfilé », on entend le fait de faire glisser le couvercle 50 sur ou autour de l'élément d'entrée 3, notamment de son moyeu d'entrée destiné à être couplé à l'arbre A0. Dès lors, l'étape d'enfilement peut être réalisée sans qu'il n'y ait de contact physique entre le couvercle de fermeture 50 et ledit élément d'entrée 3 de couple.

Durant l'étape e), on peut ajuster la position axiale du couvercle de fermeture, en fonction d'au moins
- l'épaisseur de l'anneau d'arrêt 35 choisie par défaut, suivant la dimension axiale de la gorge 135 ;
- la profondeur variable à usiner des échancrures 239 initialement découpées.

On rectifie la profondeur des échancrures 239 par usinage, et consécutivement la longueur de tranches 253 des pattes cannelées ;
- d'au moins un élément de calage 60 additionnel sélectionné parmi différentes épaisseur d'une même gamme avant d'être positionné au sein du sous-ensemble. Cet élément de calage 60 est sélectionné en fonction de sa troisième cote C3 dite épaisseur prédéfinie.

La différence entre la valeur maximale de la troisième cote C3 et la valeur minimale de la troisième cote C3 peut être comprise entre 0,5 et 2 mm.

La gamme G des éléments de calage peut présenter quatre calibres différents, autrement dit, quatre épaisseur différentes d'éléments de calage.

Ensuite on peut positionner l'élément de calage 60 en divers endroits.
- Dans le premier mode, l'élément d'entrée 3, l'organe de roulement 90, l'élément de calage 60 et le couvercle de fermeture 50, se succèdent axialement (de l'arrière AR vers l'avant AV) de préférence dans cet ordre d'empilage énoncé.
- Dans l'alternative de la [Fig.14], l'élément d'entrée 3, l'élément de calage 60, l'organe de roulement 90 et le couvercle de fermeture 50, se succèdent axialement (de l'arrière AR vers l'avant AV) de préférence dans cet ordre d'empilage énoncé.

Avant d'emmancher le couvercle 30 avec la cannelure 230, on peut positionner l'élément de calage:
- soit, dans le premier mode, dans le fond 52 du couvercle de fermeture 50 (voir [Fig. 12]) ou bien sur un organe de roulement 90 en appui contre l'élément d'entrée 3 (voir montage en [Fig.13]);
- soit, entre un organe de roulement 90 et l'élément d'entrée 3 (voir montage finale en [Fig.14]).

On décrit maintenant en détail les étapes pour la sélection d'un élément de calage 60 parmi une gamme G d'éléments de calage de calibres différents. Pour sélectionner un élément de calage 60:
- Selon une étape a') l'on mesure une première cote C1 représentative d'une distance axiale entre une face frontale avant 92 de l'organe de roulement 90 et le fond d'une échancrure 239 du porte-disques de sortie 23 ;
- Selon une étape b') l'on mesure une deuxième cote C2 représentative d'une distance axiale entre le fond 52 du couvercle de fermeture et l'extrémité externe 59 du couvercle de fermeture. L'extrémité externe 59 est notamment le bandeau 500 ;
- Enfin on sélectionne une troisième côte C3 d'élément de calage en fonction des première et deuxième cotes C1, C2. On peut prendre également en compte l'épaisseur de l'anneau d'arrêt axial.

**On** a décrit sur les Figs. 5-9, un deuxième mode de réalisation sensiblement similaire au premier mode de réalisation, à l'exception du fait que la liaison emmanchée 100 est réalisée :
- via des zones de serrages Z1, Z2 localisées différemment ;
- au moins en partie depuis un flanc extérieur 252 ;
- au moins en partie sur une ou plusieurs gorges 257 de la patte cannelée 25 ;
- au moins en partie depuis des portions distales 256 de la patte cannelée 25.

Sur les Figs. 5-9, la liaison emmanchée 100 d'une patte cannelée 25 est réalisée depuis :
- une première zone de serrage Z1 sur une portion distale 256, notamment une gorge 257 ; et
- une deuxième zone de serrage Z2 sur une portion distale 256, notamment une autre gorge 257.

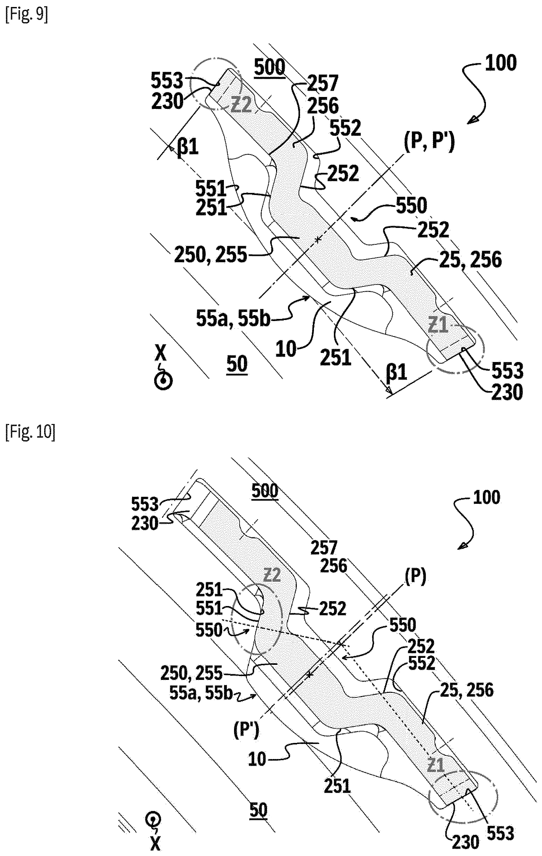

Au niveau de la zone de serrage Z1, la portion distale 256 ou gorge 257 à emmancher comprend :
- soit un flanc extérieur 252 de la patte cannelée (voir Figs. 5 et 7),
- soit une tranche 253 de la patte cannelée (voir les Fig. 8 fenêtre 55A, et Fig.9),
- soit une surface plane distale de la patte cannelée (voir les Fig. 8, fenêtre 55B, et Fig.9).

Au niveau de la zone de serrage Z2, la portion distale 256 ou gorge 257 à emmancher comprend :
- soit un (autre) flanc extérieur 252 de la patte cannelée (voir Figs. 5 et 7),
- soit une tranche 253 de la patte cannelée (voir les Fig. 8 fenêtre 55B, et Fig.9),
- soit une (autre) surface plane distale de la patte cannelée (voir les Fig. 8, fenêtre 55A, et Fig.9).

Sur la [Fig. 5], la liaison emmanchée 100 peut être réalisée en partie de part et d'autre, sur une seule portion distale 256 d'une fenêtre 55A recevant une patte cannelée 25. Et notamment de part et d'autre d'une seule gorge 257 de patte. Cette portion distale 256 définit en outre les zone de serrage Z1.

Avantageusement, chaque crête 550 et/ou portion renflée 554, peut être réalisée depuis un seul bord de la fenêtre 55A, 55B, à partir du bord extérieur 552 (voir les Figs. 6-8) de la fenêtre.

Par ailleurs chaque fenêtre 55A, 55B comprend une forme symétrique, ayant un plan P' de symétrie.

Dans les exemples illustrés, les fenêtres 55A, 55B comprennent chacune au moins une crête 550, disposée par exemple au centre de la fenêtre (Figs. 6-9).

Par ailleurs, chaque fenêtre 55A, 55B comprend une forme symétrique, ayant un plan P' de symétrie. Les fenêtres illustrées aux Figs. 6-9 comprennent chacune une seule crête 550, formée depuis le bord extérieur 552 et donc d'extension radiale vers l'intérieur. Dès lors, le plan P' de symétrie peut ainsi passer par le milieu de cette crête 550.

Sur la [Fig. 5] sont illustrés des fenêtres comprenant chacune une ou deux crêtes 550, formée chacune depuis le bord intérieur 551 et donc d'extension radiale vers l'extérieur. Par exemple selon une disposition symétrique par rapport au centre de la fenêtre.

Avantageusement, les pattes cannelées 25 peuvent être de formes différentes, notamment de dimensions angulaires différentes. Dans l'exemple de la [Fig. 5], certaines des pattes sont exemptées de dent, ne comprenant dès lors qu'une seule gorge 257. En outre, d'autres pattes cannelées 25 comprennent chacune plusieurs dents 250, par exemple deux ou trois dents 250.

Alternativement sur les Figs. 6-9, les fenêtres 55A, 55B comprennent chacune une seule crête 550, depuis laquelle est emmanchée en partie une patte cannelée 25. En particulier sur les Figs. 6-8, cette crête 550 d'extension radiale interne vient emmancher une portion distale 256, ici celle d'une gorge 257 de la patte cannelée 25. A contrario dans un exemple de la Fig. 9, aucun emmanchement de patte cannelée n'est réalisé sur la crête 550 de la fenêtre.

Avantageusement, chaque patte cannelée 25 emmanchée peut être décalée angulairement par rapport au centre ou plan P' de symétrie de la fenêtre 55A, 55B. Ainsi, tel qu'illustré(e)s en Fig. 6 :
- Les plan P, P' sont alors parallèles et espacés entre eux ;
- Les deux zones de serrage Z1, Z2 peuvent alors être disposées de manière asymétrique de part et d'autre du plan P' de la fenêtre. Par ailleurs, les zones de serrage Z1, Z2 sont angulairement opposées, et elles sont disposées sur un même diamètre, ici le bord extérieur 552 de la fenêtre.

La fenêtre 55A, 55B comprend au moins une portion renflée 554, qui est disposée d'un côté des plans P, P' de symétrie et qui est formée notamment depuis le bord extérieur 552 (voir Figs. 6-8). Sur les Figs. 6 et 8 sont illustrées des fenêtres 55A, 55B comprenant chacune une seule portion renflée 554, depuis laquelle est emmanchée en partie une patte cannelée 25. Une telle portion renflée 554 d'extension radiale interne vient emmancher une portion distale 256, ici celle d'une gorge 257.

Sur la [Fig. 7] est illustrée une fenêtre 55A, 55B comprenant deux portions renflées 554, depuis lesquelles est emmanchée en partie une patte cannelée 25, de préférence deux portions emmanchées qui sont rapprochées l'une de l'autre, en particulier sur une même crête 550. La crête 550 est ainsi pourvue de deux portions renflées 554 qui sont disposées de part et d'autre de la crête. Chacune des portions renflées 554 d'extension radiale interne vient emmancher une des portions distales 256, ici celle d'une des gorges 257.

Tel qu'illustré sur la [Fig. 7], la liaison emmanchée 100 est réalisée sur des portions distales 256 de la patte cannelée 25, en particulier dans un enfoncement de matière d'au moins une dent 250. La liaison emmanchée 100 d'une patte cannelée 25 est ainsi réalisée depuis :
- une première zone de serrage Z1 définie sur une portion distale 256, ici un flanc extérieur 252 ; et
- une deuxième zone de serrage Z2 définie sur une autre portion distale 256, ici un autre flanc extérieur.

Dès lors, une fenêtre 55A, 55B comprend au moins une crête 550, ici une seule, depuis laquelle est emmanchée en partie une patte cannelée 25. Une crête 550 radialement interne vient emmancher une portion distale 256, ici celle d'une dent 250. Par ailleurs, les zones de serrage Z1, Z2 sont formées sur la crête 550. Elles sont disposées sur un même diamètre. Elles sont angulairement opposées. En outre, les zones de serrage Z1, Z2 sont disposées de manière symétrique de part et d'autre du plan P' de la fenêtre.

Sur la [Fig. 7], les deux portions distales 256 emmanchées définissent une dent 250, ici une seule. Les portions distales 256 sont ici des parties externes conjointes de la dent 250, réalisées par un enfoncement. En outre, chaque patte cannelée 25 emmanchée peut être centrée angulairement par rapport au centre ou plan P' de symétrie de la fenêtre 55A, 55B. Les plan P, P' sont confondus, et passent par l'axe X.

Sur la [Fig. 7], la crête 550 est formée depuis le centre de la fenêtre, et notamment depuis le bord extérieur 552. Le plan P' de symétrie de la fenêtre passe par le milieu de la crête 550. En outre, la fenêtre 55A, 55B comprend au moins une portion renflée 554, ici au nombre de deux, depuis lesquelles est emmanchée en partie une patte cannelée 25.

Ces portions renflées 554, d'extension tangentielle vers l'intérieur, sont formées de part et d'autre de ladite crête 550, et elles sont notamment disposées de part et d'autre des plans P, P' de symétrie. Elles s'étendent tangentiellement en directions opposées, pour emmancher une même dent 250 et assurer le centrage de la patte cannelée.

Sur la [Fig. 8] sont disposées les deux zones de serrage Z1, Z2 et notamment les portions renflées 554, de manière symétrique de part et d'autre du plan P' de la fenêtre. Les zones de serrage Z1, Z2 sont angulairement opposées, et disposées sur un même diamètre, ici le bord extérieur 552.

Avantageusement certaines zones de serrage Z1, Z2 des fenêtres 55A, 55B peuvent être angulairement rapprochées les unes des autres, ou au contraire éloignées les unes des autres. Pour ce faire, certaines pattes cannelées 25 ou fenêtres peuvent être angulairement rapprochées les unes des autres, ou au contraire éloignées les unes des autres.

Sur la [Fig. 8] sont illustrées deux fenêtres 55A, 55B angulairement rapprochées. En outre les pattes cannelées 25 peuvent être angulairement régulièrement espacées. On obtient alors une liaison emmanchée 100 dans laquelle :
- au moins certaines pattes cannelées 25 (voir fenêtre 55A) sont décalées angulairement d'un côté (des plans P') des fenêtres 55A, selon un premier sens A de rotation relative (ici horaire); et/ou
- au moins certaines pattes cannelées 25 (voir fenêtre 55A) sont décalées angulairement d'un autre côté (des plans P') des fenêtres 55B, selon un deuxième sens B de rotation relative (ici antihoraire).

Sur la [Fig. 9] est illustrée une patte cannelée 25 emmanchée conjointement entre les bords latéraux 553 d'une fenêtre 55A, 55B. De ce fait, la patte cannelée 25 est emmanchée sur les deux tranches 253 pour former la liaison emmanchée 100. Les deux tranches 253 définissent les zones de serrage Z1, Z2.

On a décrit sur les Figs. 10-12, un troisième mode de réalisation sensiblement similaire au premier mode de réalisation, à l'exception du fait que la liaison emmanchée 100 est réalisée :
- via des zones de serrages Z1, Z2 localisées différemment ;
- au moins en partie depuis un flanc intérieur 251 ;
- au moins en partie sur une ou plusieurs dents 250 de la patte cannelée 25 ;
- au moins en partie depuis des portions proximale 255 de la patte cannelée 25.

Dans ces situations, la liaison emmanchée 100 d'une patte cannelée 25 est réalisée depuis :
- une première zone de serrage Z1 définie sur une portion proximale 255 (Fig. 10) notamment une dent 250, ou bien sur une portion distales 255 (Fig. 11) notamment une gorge 257 ; et
- une deuxième zone de serrage Z2 définie sur une portion proximale 255, notamment une (autre) dent.

Tel qu'illustrée aux Figs. 10-12, la portion proximale 255 ou dent 250 à emmancher, au niveau de la zone de serrage Z2, comprend un flanc intérieur 251 de la patte cannelée. Dans l'exemple de la [Fig. 10], la portion distale 256 ou gorge 257 à emmancher, au niveau de la zone de serrage Z1, comprend une tranche 253 de la patte cannelée. En outre les portions proximale 255 et distale 256 emmanchées, et notamment lesdites dent 250 et gorge 257 sont immédiatement adjacentes.

En outre, les zones de serrage Z1, Z2 sont angulairement et diamétralement opposées. Dès lors, les zones de serrage Z1, Z2 sont disposées de manière asymétrique de part et d'autre du plan P. Chaque fenêtre 55A, 55B comprend deux crêtes 550, qui s'étendent en direction opposée l'une de l'autre. A titre d'exemple sur la [Fig. 10], une seule des crêtes 550 réalise la liaison emmanchée 100.

Par ailleurs, l'une des crêtes 550 est décalée angulairement par rapport au plan P de symétrie de la patte cannelée. Dans une telle situation :
- L'une des crêtes 550 est formée depuis le centre de la fenêtre, ici depuis le bord extérieur 552 et elle s'étend radialement vers l'extérieur. Le plan P' de symétrie passe par le milieu de la crête ;
- L'autre crête 550 est formé depuis le bord extérieur 552 et s'étend radialement vers l'intérieur. Cette crête 550 réalise la liaison emmanchée 100 depuis laquelle est emmanchée en partie une patte cannelée 25. La crête 550 radialement externe vient emmancher une portion proximale 255, ici celle d'une dent 250.

Dans l'alternative des Figs. 11 à 12, la portion proximale 255 ou dent 250 à emmancher, au niveau de la zone de serrage Z1, comprend un flanc intérieur 251 de la patte cannelée. En outre les portions proximales 255 emmanchées, et notamment lesdites dent 250 sont immédiatement adjacentes.

En outre, les zones de serrage Z1, Z2 sont angulairement opposées, et disposées sur un même diamètre par rapport à l'axe X. Dès lors, les zones de serrage Z1, Z2 sont disposées de manière asymétrique de part et d'autre du plan P.

Chaque fenêtre 55A, 55B comprend un seule crête 550, d'extension radiale vers l'extérieur. A titre d'exemple sur la [Fig. 11], une seule des crêtes 550 réalise la liaison emmanchée 100.

L'usage du verbe « comporter », « comprendre » ou « inclure » et de ses formes conjuguées n'exclut pas la présence d'autres éléments ou d'autres étapes que ceux énoncés dans une revendication. Dans les revendications, tout signe de référence entre parenthèses ne saurait être interprété comme une limitation de revendication.

Les dimensions indiquées ou illustrées peuvent ne pas être à l'échelle et ne correspondent qu'à un modèle de liaison emmanchée particulier développée par la demanderesse.

On adaptera autant que de besoin le procédé de fermeture par liaison emmanchée selon l'invention, à d'autres diamètres nominaux du porte-disques et du couvercle de fermeture, et à d'autres épaisseurs de ses composants.

## Revendications

1. Module d'embrayage (M) pour un engin de mobilité, d'axe (X) de rotation, comprenant :
- au moins un embrayage d'entrée (E0) de type multidisque, comprenant : un porte-disques d'entrée (13) de couple fixé solidairement à un élément d'entrée (3) de couple, et un porte-disques de sortie (23) de couple, lesdits portes-disques d'entrée et de sortie (13, 23) comprenant chacun une cannelure (130, 230) adaptée à supporter en partie un groupe de disques (10) de l'embrayage d'entrée (E0), et
- un couvercle de fermeture (50) du module d'embrayage, disposé d'un côté de l'élément d'entrée (3) qui est lié solidairement au moins radialement au porte-disques d'entrée ou de sortie (13, 23) par une liaison emmanchée (100), la liaison emmanchée étant maintenue fixe par un anneau d'arrêt (35) axial inséré dans une gorge (135) réalisée dans ledit porte-disque emmanché d'entrée ou de sortie, **caractérisé en ce que** le couvercle de fermeture (50) est monté en pré-charge axiale dans le porte-disque emmanché d'entrée ou de sortie, la pré-charge axiale étant réalisée par déformation axiale dudit couvercle de fermeture, en particulier qui est déformé par rapport à un élément de calage (60) du fond (52) du couvercle de fermeture.

2. Module d'embrayage (M) selon la revendication 1, dans lequel un bandeau externe (500) du couvercle de fermeture est ménagé pour retenir le porte-disques emmanché d'entrée ou de sortie, de préférence l'épaisseur (Lp) du bandeau externe (500) étant supérieure à 1,5 fois l'épaisseur (Ep) dudit porte-disque emmanché d'entrée ou de sortie.

3. Module d'embrayage (M) selon l'une des revendications précédentes, dans lequel le
couvercle de fermeture est reçu au travers d'échancrures (239) ménagées sur le porte-disques emmanchée d'entrée ou de sortie,
un fond (52) du couvercle de fermeture étant délimité par une portion de cylindre interne (57) sur laquelle est centré un élément de calage (60) ou un organe de roulement (90),
la position axiale du couvercle de fermeture étant notamment modulable en fonction d'au moins :
- une force de précharge exercée sur le couvercle de fermeture, de préférence sous presse, qui est par exemple supérieure ou égale à 100 Newton,
- la profondeur variable desdites échancrures (235),
- l'épaisseur variable de l'élément de calage (60), et
- l'épaisseur de l'anneau d'arrêt (35) axial.

4. Module d'embrayage (M) selon l'une des revendications précédentes, dans lequel le porte-disques emmanché d'entrée ou de sortie (13, 23) et le couvercle de fermeture (50) sont réalisés dans des matériaux différents de telle manière à réaliser la liaison emmanchée (100), par exemple le ratio de la dureté dudit porte-disques emmanché d'entrée ou de sortie sur la dureté du couvercle de fermeture (50) étant compris entre 1,1 et 3.

5. Module d'embrayage (M) selon l'une des revendications précédentes dans lequel des pattes cannelées (25) sont formées dans le prolongement de la cannelure du porte-disques emmanché d'entrée ou de sortie, et sont logées au travers de fenêtres (55A, 55B) du couvercle de fermeture, au moins certaines des pattes cannelées étant emmanchées dans lesdites fenêtres du couvercle de fermeture, de préférence de manière centrées ou décentrées au sein desdites fenêtres.

6. Module d'embrayage (M) selon la revendication 5, dans lequel la gorge (135) de l'anneau d'arrêt axial est discontinue et réalisée dans au moins certaines des pattes cannelées du porte-disques emmanché d'entrée ou de sortie, de préférence dans au moins 1/3 de l'ensemble desdites pattes cannelées.

7. Module d'embrayage (M) selon la revendication 5 ou 6, dans lequel une patte cannelée (25) présente en section un plan (P) de symétrie passant par l'axe (X), la liaison emmanchée (100) de ladite patte cannelée étant réalisée en deux zones de serrage (Z1, Z2) disposées de manière symétrique ou asymétrique de part et d'autre du plan (P) de symétrie.

8. Module d'embrayage (M) selon l'une des revendications 5 à 7, dans lequel la liaison emmanchée (100) est réalisée au moins en partie par : un flanc intérieur (251) ou une tranche (253) d'une patte cannelée (25), par exemple la liaison emmanchée (100) d'une patte cannelée est réalisée :
- soit depuis deux flancs intérieurs (251) espacés d'une patte cannelée,
- soit depuis deux tranches (253) espacées d'une patte cannelée,
- soit depuis un flanc intérieur (251) et un flanc extérieur (252) espacés d'une patte cannelée,
- soit depuis un flanc intérieur (251) et une tranche (253) espacés d'une patte cannelée.

9. Module d'embrayage (M) selon l'une des revendications 5 à 8, dans lequel la liaison emmanchée (100) est réalisée au moins en partie par : un seul bord d'une fenêtre ou deux bords d'une fenêtre choisi(s) parmi les bords intérieur (551), extérieur (552) et latéraux (553) délimitant ladite fenêtre (55A, 55B).

10. Module d'embrayage (M) selon l'une des revendications 5 à 8, dans lequel la liaison emmanchée (100) est réalisée au moins en partie par : au moins une crête (550) et/ou une portion renflée (554) d'une fenêtre (55A, 55B) du couvercle de fermeture, depuis laquelle (ou lesquelles) est emmanchée en partie une patte cannelée (25) par exemple une dent (250) de ladite patte cannelée, par exemple une fenêtre (55A, 55B) comprenant :
- soit deux portions renflées (554) au moins angulairement opposées, ou
- soit une crête (550) et une portion renflée (554) au moins angulairement opposées, ou
- soit une crête (550) pourvue de deux portions renflées (554) de part et d'autre de la crête.

11. Module d'embrayage (M) selon l'une quelconque des revendications précédentes, dans lequel il comprend en outre :
un premier et un deuxième embrayages de sortie (E1, E2) de type multidisque, supportés par un moyeu cylindrique (80) et coopérant en partie avec un premier et un deuxième éléments de sortie (6, 7) de couple, aptes à être couplés respectivement en rotation à un premier et un deuxième arbres menés (A1, A2), l'embrayage d'entrée (E0) est disposé au-delà des premier et deuxième embrayages de sortie (E1, E2), la liaison emmanchée (100) étant en partie par le porte-disques de sortie (23) de couple de l'embrayage d'entrée.

12. Procédé de fermeture d'un module d'embrayage (M), notamment d'un triple embrayage, comprenant au moins les étapes suivantes :
a) Fournir un sous-ensemble d'au moins un embrayage (E0, E1, E2), comportant en outre
- un élément d'entrée (3) de couple ; un porte-disques d'entrée (13) de couple ; et
- un moyeu cylindrique (80) ; un porte-disques de sortie (23) de couple comprenant une cannelure (230) ;
b) Fixer ensemble le porte-disques d'entrée (13) et l'élément d'entrée (3) de couple, par soudure ;
c) Fixer ensemble le moyeu cylindrique (80) et le porte-disques de sortie (23) de couple, par soudure ;
d) Fournir un couvercle de fermeture (50) et un anneau d'arrêt (35) axial ;
e) Emmancher (100) le couvercle de fermeture (50) sur la cannelure (230) du porte-disques de sortie (23), avant de le retenir axialement par l'anneau d'arrêt (35) axial inséré en partie dans une gorge (135) formée dans le porte-disques de sortie (23).

13. Procédé de fermeture d'un module d'embrayage selon la revendication 12, comprenant en outre au moins l'une des étapes suivantes :
- Enfiler le couvercle de fermeture sur l'élément d'entrée (3) de couple avant d'emmancher la cannelure (230) du porte-disques de sortie (23) dans le couvercle de fermeture (50) ;
- Découper en extrémité libre de la cannelure (230) du porte-disques de sortie (23), des échancrures (235) à l'intérieur desquelles le couvercle de fermeture est ensuite emmanché en force ;
- Découper au sein du couvercle de fermeture, des fenêtres (55A, 55B) au travers desquelles la cannelure (230) du porte-disques de sortie (23) est ensuite emmanchée en force ;
- Ajuster la position axiale du couvercle de fermeture, en rectifiant la profondeur des échancrures (239) ;
- Ajuster la position axiale du couvercle de fermeture, en ajoutant un élément de calage (60) sélectionné parmi différentes épaisseur d'une même gamme, avant d'être positionné avec le sous-ensemble d'au moins un embrayage (E0, E1, E2), de préférence:
- soit dans le fond (52) du couvercle de fermeture (50),
- soit sur un organe de roulement (90) en appui contre l'élément d'entrée (3) de couple,
- soit entre un organe de roulement (90) et l'élément d'entrée (3) de couple.

## Patentansprüche

1. Kupplungsmodul (M) für ein Fahrzeug mit einer Drehachse (X), umfassend:
- mindestens eine Mehrscheibeneingangs-Kupplung (E0), umfassend: einen fest mit einem Drehmomenteingangsglied (3) verbundenen Drehmoment-Eingangs-Scheibenhalter (13) und einen Drehmoment-Ausgangs-Scheibenhalter (23), wobei die Eingangs- und Ausgangsscheibenhalter (13, 23) jeweils eine Keilverzahnung (130, 230) aufweisen, die dazu ausgelegt ist, einen Teil einer Scheibengruppe (10) der Eingangskupplung (E0) zu tragen, und
- einen Verschlussdeckel (50) des Kupplungsmoduls, der auf einer Seite des Drehmomenteingangsglied (3) angeordnet ist und zumindest radial fest mit dem Eingangs- oder Ausgangsscheibenhalter (13, 23) durch eine Steckverbindung (100) verbunden ist, wobei die Steckverbindung durch einen axialen Sicherungsring (35) festgehalten wird, der in eine in dem eingesteckten Einlass- oder Auslassscheibenhalter ausgebildete Nut (135) eingesetzt ist, **dadurch gekennzeichnet, dass** der Verschlussdeckel (50) in dem eingesteckten Einlass- oder Auslassscheibenhalter axial vorgespannt ist, wobei die axiale Vorspannung durch axiale Verformung des Verschlussdeckels erzeugt wird, der insbesondere gegenüber einem Keilelement (60) des Bodens (52) des Verschlussdeckels verformt wird.

2. Kupplungsmodul (M) nach Anspruch 1, wobei ein Außenband (500) des Verschlussdeckels vorgesehen ist, um den eingesteckten Einlass- oder Auslassscheibenhalter zu halten, wobei vorzugsweise die Dicke (Lp) der Außenblende (500) größer als das 1,5-fache der Dicke (Ep) des eingesteckten Einlass- oder Auslassscheibenträgers ist.

3. Kupplungsmodul (M) nach einem der vorstehenden Ansprüche, wobei der Verschlussdeckel durch Aussparungen (239) aufgenommen ist, die an dem eingesteckten Einlass- oder Auslassscheibenhalter vorgesehen sind, wobei
wobei ein Boden (52) des Verschlussdeckels durch einen inneren Zylinderabschnitt (57) begrenzt ist, auf dem ein Keilelement (60) oder ein Wälzkörper (90) zentriert ist,
wobei die axiale Position des Verschlussdeckels insbesondere in Abhängigkeit von mindestens folgenden Faktoren veränderbar ist:
- einer vorzugsweise unter Druck auf den Verschlussdeckel ausgeübten Vorspannkraft, die beispielsweise größer oder gleich 100 Newton ist,
- der variablen Tiefe der Aussparungen (235),
- der variablen Dicke des Befestigungselements (60) und
- der Dicke des axialen Anschlagrings (35).

4. Kupplungsmodul (M) nach einem der vorstehenden Ansprüche, bei dem der eingesteckte Eingangs- oder Ausgangsscheibenhalter (13, 23) und der Verschlussdeckel (50) aus unterschiedlichen Materialien hergestellt sind, so dass die Steckverbindung (100) hergestellt wird, wobei beispielsweise das Verhältnis der Härte des Eingangs- oder Ausgangsscheibenhalters zur Härte des Verschlussdeckels (50) zwischen 1,1 und 3 liegt.

5. Kupplungsmodul (M) nach einem der vorstehenden Ansprüche, bei dem in Verlängerung der Verzahnung des eingesteckten Eingangs- oder Ausgangsscheibenhalters geriffelten Laschen (25) ausgebildet sind, die durch Fenster (55A, 55B) des Verschlussdeckels aufgenommen sind, wobei zumindest einige der geriffelten Laschen in die Fenster des Verschlussdeckels, vorzugsweise zentriert oder exzentrisch innerhalb der Fenster, eingesteckt sind.

6. Kupplungsmodul (M) nach Anspruch 5, wobei die Nut (135) des axialen Anschlagrings unterbrochen und in mindestens einigen der geriffelten Laschen des eingesteckten Einlass- oder Auslassscheibenträgers, vorzugsweise in mindestens 1/3 aller geriffelten Laschen, ausgebildet ist.

7. Kupplungsmodul (M) nach Anspruch 5 oder 6, wobei ein geriffelter Laschen (25) im Querschnitt eine Symmetrieebene (P) aufweist, die durch die Achse (X) verläuft, wobei die Steckverbindung (100) des genuteten Laschens in zwei Klemmbereichen (Z1, Z2) ausgebildet ist, die symmetrisch oder asymmetrisch beiderseits der Symmetrieebene (P) angeordnet sind.

8. Kupplungsmodul (M) nach einem der Ansprüche 5 bis 7, wobei die Steckverbindung (100) zumindest teilweise durch eine Innenflanke (251) oder eine Kante (253) eines geriffelten Laschens (25) gebildet ist, wobei beispielsweise die Steckverbindung (100) einer geriffelten Lasche
- entweder von zwei beabstandeten Innenflanken (251) einer Keilnut,
- oder von zwei beabstandeten Scheiben (253) einer geriffelten Lasche,
- oder von einer Innenflanke (251) und einer Außenflanke (252) beabstandet zu einer geriffelten Lasche,
- oder von einer Innenseite (251) und einer Kante (253), die um eine geriffelte Lasche voneinander beabstandet sind.

9. Kupplungsmodul (M) nach einem der Ansprüche 5 bis 8, wobei die Steckverbindung (100) zumindest teilweise durch eine einzige Kante eines Fensters oder zwei Kanten eines Fensters, die aus den das Fenster begrenzenden Innenkanten (551), Außenkanten (552) und Seitenkanten (553) ausgewählt sind, gebildet ist (55A, 55B) begrenzen.

10. Kupplungsmodul (M) nach einem der Ansprüche 5 bis 8, wobei die Steckverbindung (100) zumindest teilweise durch mindestens einen Steg (550) und/oder einen verdickten Abschnitt (554) eines Fensters (55A, 55B) des Verschlussdeckels, von der (denen) aus eine geriffelte Laschen (25), beispielsweise ein Zahn (250) der geriffelten Lasche, teilweise eingesteckt ist,
beispielsweise ein Fenster (55A, 55B) mit:
- entweder zwei zumindest winklig gegenüberliegende verdickte Abschnitte (554) oder
- oder einen Kamm (550) und einen zumindest winklig gegenüberliegenden verdickten Abschnitt (554), oder
- oder einen Kamm (550) mit zwei verdickten Abschnitten (554) auf beiden Seiten des Kamms.

11. Kupplungsmodul (M) nach einem der vorstehenden Ansprüche, wobei es außerdem umfasst:
eine erste und eine zweite Ausgangs-Kupplung (E1, E2) vom Mehrscheibentyp, die von einer zylindrischen Nabe (80) getragen werden und teilweise mit einem ersten und einem zweiten Drehmomentausgangselement (6, 7) zusammenwirken, die jeweils drehfest mit einer ersten und einer zweiten Abtriebswelle (A1, A2) gekoppelt werden können, die Eingangskupplung (E0) ist jenseits der ersten und zweiten Ausgangskupplungen (E1, E2) angeordnet, wobei die Steckverbindung (100) teilweise durch den Ausgangsdiskenträger (23) der Eingangskupplung gebildet wird.

12. Verfahren zum Schließen eines Kupplungsmoduls (M), insbesondere einer Dreifachkupplung, mit mindestens den folgenden Schritten:
a) Bereitstellen einer Unterbaugruppe aus mindestens einer Kupplung (E0, E1, E2), die außerdem umfasst
- ein Drehmomenteingangsglied (3); einen Drehmomenteingangsplattenhalter (13); und
- eine zylindrische Nabe (80); einen Drehmomentausgangsscheibenhalter (23) mit einer Keilnut (230);
b) Verbinden des Eingangsplattenhalters (13) und des Drehmomenteingangsglieds (3) durch Schweißen;
c) Die zylindrische Nabe (80) und den Drehmomentausgangsscheibenhalter (23) durch Schweißen miteinander verbinden;
d) Eine Verschlussdeckel (50) und einen axialen Sicherungsring (35) bereitstellen;
e) Den Verschlussdeckel (50) auf die Nut (230) des Ausgangsscheibenhalters (23) aufstecken (100), bevor er durch den axialen Sicherungsring (35), der teilweise in eine im Ausgangsscheibenhalter (23) ausgebildete Nut (135) eingesetzt ist, axial gehalten wird.

13. Verfahren zum Schließen eines Kupplungsmoduls nach Anspruch 12, das zusätzlich mindestens einen der folgenden Schritte umfasst:
- Aufstecken des Verschlussdeckels auf das Drehmomenteingangsglied (3), bevor die Nut (230) des Ausgangsscheibenhalters (23) in den Verschlussdeckel (50) eingesteckt wird;
- Ausschneiden von Aussparungen (235) am freien Ende der Keilnut (230) des Ausgangsscheibenhalters (23), in die der Verschlussdeckel anschließend fest eingepasst wird;
- In den Verschlussdeckel Fenster (55A, 55B) ausschneiden, durch die anschließend die Nut (230) des Ausgangsscheibenhalters (23) mit Kraft eingesteckt wird;
- Einstellen der axialen Position des Verschlussdeckels durch Korrigieren der Tiefe der Aussparungen (239);
- Einstellen der axialen Position des Verschlussdeckels durch Hinzufügen eines aus verschiedenen Dicken derselben Reihe ausgewählten Passelements (60), bevor dieser mit der Unterbaugruppe aus mindestens einer Kupplung (E0, E1, E2) positioniert wird, vorzugsweise:
- entweder im Boden (52) des Verschlussdeckels (50),
- oder auf einem Wälzkörper (90), der gegen das Drehmomenteingangsglied (3) abgestützt ist,
- oder zwischen einem Wälzkörper (90) und dem Drehmomenteingangsglied (3).

## Claims

1. Clutch module (M) for a mobility machine, of axis (X) of rotation, comprising:
- at least one input clutch (E0) of the multidisc type, comprising: a torque input disc carrier (13) fixed securely to a torque input element (3), and a torque output disc carrier (23), said input and output disc carriers (13, 23) each comprising a spline (130, 230) designed to partially support a group of discs (10) of the input clutch (E0), and
- a closure cover (50) for the clutch module, which is disposed on one side of the torque input element (3) and is securely connected at least radially to the input or output disc carrier (13, 23) by a press-fit (100), the press-fit being kept fixed by an axial stop ring (35) inserted into a groove (135) provided in said fitted input or output disc carrier,
**characterized in that** the closure cover (50) is mounted under axial preloading in the fitted input or output disc carrier, the axial preloading being realized by axial deformation of said closure cover, in particular which is deformed with respect to a wedging element (60) of the bottom (52) of the closure cover.

2. Clutch module (M) according to Claim 1, wherein an external strip (500) of the closure cover is provided to retain the fitted input or output disc carrier, the thickness (Lp) of the external strip (500) preferably being greater than 1.5 times the thickness (Ep) of said fitted input or output disc carrier.

3. Clutch module (M) according to one of the preceding claims, wherein the closure cover is received through notches (239) provided in the fitted input or output disc carrier,
a bottom (52) of the closure cover being delimited by an internal cylinder portion (57) on which a wedging element (60) or a rolling bearing member (90) is centred, the axial position of the closure cover being in particular adaptable depending on at least:
- a preloading force exerted on the closure cover, preferably by pressing, which is for example greater than or equal to 100 newton,
- the variable depth of said notches (239),
- the variable thickness of the wedging element (60), and
- the thickness of the axial stop ring (35).

4. Clutch module (M) according to one of the preceding claims, wherein the fitted input or output disc carrier (13, 23) and the closure cover (50) are made from different materials so as to create the press-fit (100), for example the ratio of the hardness of said fitted input or output disc carrier to the hardness of the closure cover (50) being between 1.1 and 3.

5. Clutch module (M) according to one of the preceding claims, wherein splined tabs (25) are formed in the continuation of the spline of the fitted input or output disc carrier, and are accommodated through windows (55A, 55B) in the closure cover, at least some of the splined tabs being fitted in said windows of the closure cover, preferably in a centred or off-centre manner within said windows.

6. Clutch module (M) according to Claim 5, wherein the groove (135) in the axial stop ring is discontinuous and provided in at least some of the splined tabs of the fitted input or output disc carrier, preferably in at least 1/3 of the total number of said splined tabs.

7. Clutch module (M) according to Claim 5 or 6, wherein a splined tab (25) has, in cross section, a plane (P) of symmetry passing through the axis (X), the press-fit (100) of said splined tab being created in two clamping zones (Z1, Z2) disposed symmetrically or asymmetrically on either side of the plane (P) of symmetry.

8. Clutch module (M) according to one of Claims 5 to 7, wherein the press-fit (100) is realized at least in part by: an inner flank (251) or an edge face (253) of a splined tab (25), for example the press-fit (100) of a splined tab is created:
- from two spaced-apart inner flanks (251) of a splined tab,
- or from two spaced-apart edge faces (253) of a splined tab,
- or from a spaced-apart inner flank (251) and outer flank (252) of a splined tab,
- or from a spaced-apart inner flank (251) and edge face (253) of a splined tab.

9. Clutch module (M) according to one of Claims 5 to 8, wherein the press-fit (100) is created at least in part by: one edge of a window or two edges of a window, which is or are chosen from the inner edges (551), outer edges (552) and lateral edges (553) delimiting said window (55A, 55B).

10. Clutch module (M) according to one of Claims 5 to 8, wherein the press-fit (100) is created at least in part by: at least one ridge (550) and/or one bulging portion (554) of a window (55A, 55B) of the closure cover, from which part of a splined tab (25), for example a tooth (250) of said splined tab, is fitted,
for example a window (55A, 55B) comprising:
- two bulging portions (554) that are at least angularly opposite one another,
- or a ridge (550) and a bulging portion (554) that are at least angularly opposite one another,
- or a ridge (550) provided with two bulging portions (554) on either side of the ridge.

11. Clutch module (M) according to any one of the preceding claims, which also comprises:
a first and a second outlet clutch (E1, E2) of the multidisc type, which are supported by a cylindrical hub (80) and cooperate partially with a first and a second torque output element (6, 7), which are able to be respectively coupled in terms of rotation to a first and a second driven shaft (A1, A2), the input clutch (E0) being disposed beyond the first and second output clutches (E1, E2), the press-fit (100) being created in part by the torque output disc carrier (23) of the input clutch.

12. Method for closing a clutch module (M), in particular a triple clutch, comprising at least the following steps:
a) providing a subassembly of at least one clutch (E0, E1, E2), also comprising
- a torque input element (3); a torque input disc carrier (13); and
- a cylindrical hub (80); a torque output disc carrier (23) comprising a spline (230);
b) fixing together the input disc carrier (13) and the torque input element (3), by welding;
c) fixing together the cylindrical hub (80) and the torque output disc carrier (23), by welding;
d) providing a closure cover (50) and an axial stop ring (35);
e) fitting (100) the closure cover (50) on the spline (230) of the output disc carrier (23), before retaining it axially with the axial stop ring (35) inserted partially into a groove (135) formed in the output disc carrier (23).

13. Method for closing a clutch module according to Claim 12, also comprising at least one of the following steps:
- slipping the closure cover on the torque input element (3) before fitting the spline (230) of the output disc carrier (23) in the closure cover (50);
- cutting, at the free end of the spline (230) of the output disc carrier (23), notches (239) inside which the closure cover is then force-fitted;
- cutting, within the closure cover, windows (55A, 55B) through which the spline (230) of the output disc carrier (23) is then force-fitted;
- adjusting the axial position of the closure cover, by altering the depth of the notches (239);
- adjusting the axial position of the closure cover, by adding a wedging element (60) selected from different thicknesses of a single range, before being positioned with the subassembly of at least one clutch (E0, E1, E2), preferably:
- in the bottom (52) of the closure cover (50),
- or on a rolling bearing member (90) in contact against the torque input element (3),
- or between a rolling bearing member (90) and the torque input element (3).
